(19) **Europäisches Patentamt / European Patent Office / Office européen des brevets**

(11) **EP 4 559 880 A1**

(12) **EUROPEAN PATENT APPLICATION**
published in accordance with Art. 153(4) EPC

(43) Date of publication:
**28.05.2025 Bulletin 2025/22**

(21) Application number: **23842899.9**

(22) Date of filing: **12.07.2023**

(51) International Patent Classification (IPC):
**C03C 3/32** (2006.01)    **C01B 25/14** (2006.01)
**H01B 1/06** (2006.01)    **H01B 1/10** (2006.01)
**H01M 4/62** (2006.01)    **H01M 10/0562** (2010.01)

(52) Cooperative Patent Classification (CPC):
**C01B 25/14; C03C 3/32; H01B 1/06; H01B 1/10; H01M 4/62; H01M 10/0562; Y02E 60/10**

(86) International application number:
**PCT/JP2023/025802**

(87) International publication number:
**WO 2024/018976 (25.01.2024 Gazette 2024/04)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **19.07.2022 JP 2022114970**

(71) Applicant: **AGC INC.**
**Chiyoda-ku,**
**Tokyo 1008405 (JP)**

(72) Inventors:
• **FUJII Naoki**
 **Tokyo 100-8405 (JP)**
• **FUKUTOMI Yuki**
 **Tokyo 100-8405 (JP)**
• **YUSA Tetsuhito**
 **Tokyo 100-8405 (JP)**

(74) Representative: **Müller-Boré & Partner**
**Patentanwälte PartG mbB**
**Friedenheimer Brücke 21**
**80639 München (DE)**

(54) **SULFIDE SOLID ELECTROLYTE, AND METHOD FOR PRODUCING SAME**

(57)    The present invention relates to a sulfide solid electrolyte containing a sulfide glass phase, and a $PS_4$ unit and a $P_2S_7$ unit, wherein the ratio of the peak intensity I of the $PS_4$ unit to the peak intensity I of the $P_2S_7$ unit in the Raman spectrum satisfies the relationship $0.05 < \{I_{(P2S7)}/I_{(PS4)}\} < 1.00$, and the sulfide solid electrolyte contains Li, P, S and Ha as constituent elements, and the contents of the constituent elements are as follows, 30-50 at% of Li, 5-15 at% of P, and 30-60 at% of S.

FIG. 6

EP 4 559 880 A1

**Description**

TECHNICAL FIELD

The present invention relates to a sulfide solid electrolyte and a method for producing the same.

BACKGROUND ART

Lithium-ion secondary batteries are widely used for a portable electronic device such as a mobile phone and a notebook computer.

In the related art, a liquid electrolyte has been used in a lithium-ion secondary battery, but there is a concern of liquid leakage, ignition, and the like, and it is necessary to increase the size of a case for safety design. Improvements are also desired in terms of short battery life and narrow operating temperature range.

In contrast, attention has been paid to an all-solid-state lithium-ion secondary battery in which a solid electrolyte is used as an electrolyte of a lithium-ion secondary battery, from the viewpoint of improving safety, charge and discharge at a high speed, and reducing the size of a case.

The solid electrolytes are roughly classified into sulfide solid electrolytes and oxide solid electrolytes. Sulfide ions constituting the sulfide solid electrolytes have polarizability and lithium ion conductivity higher than those of oxide ions constituting the oxide solid electrolytes. As the sulfide solid electrolytes, there has been known LGPS crystals such as $Li_{10}GeP_2S_{12}$, argyrodite crystals such as $Li_6PS_5Cl$, LPS crystallized glass such as $Li_7P_3S_{11}$ crystallized glass, and the like.

Li-P-S-based compositions have a relatively wide potential window and low reactivity with active materials, and therefore have attracted attention as sulfide solid electrolytes with excellent electrochemical stability.

For example, Patent Literature 1 discloses a Li-P-S-based solid electrolyte having a crystal ratio of 60 mol% to 100 mol% and having a specific peak in a solid-state $^{31}$PNMR spectrum. Patent Literature 2 discloses a Li-P-S-Ha-based solid electrolyte having a crystal ratio of 60 mol% to 100 mol% and having a specific peak in a solid-state $^{31}$PNMR spectrum. Here, Ha means a halogen element.

CITATION LIST

PATENT LITERATURE

[0008]

　Patent Literature 1: WO2007/066539
　Patent Literature 2: JP2014-093262A

SUMMARY OF INVENTION

TECHNICAL PROBLEM

However, a solid electrolyte in which crystals are precipitated at a high volume fraction has poor contact between electrolytes and poor contact between an electrolyte and an active material. Heat treatment conditions for crystallization are strict, and even slight differences in treatment can result in differences in state, so that there is a large variation in quality as a solid electrolyte.

In contrast, a solid electrolyte containing a glass phase has good contact between electrolytes and good contact between an electrolyte and an active material. Even when a solid electrolyte containing a glass phase is pulverized and used in powder form, a decrease in conductivity due to pulverization is extremely small. Further, by melting a raw material to produce a solid electrolyte containing a glass phase, composition homogeneity is good, and the solid electrolyte can be molded into any shape.

On the other hand, a Li-P-S-based sulfide glass known in the related art has low lithium ion conductivity.

Therefore, an object of the present invention is to provide a sulfide solid electrolyte containing a sulfide glass phase and having high lithium ion conductivity, and a method for producing the same.

SOLUTION TO PROBLEM

As a result of extensive investigations, the inventors have found that the above problems can be solved by a sulfide solid electrolyte containing a sulfide glass phase, which mainly contains a $PS_4$ unit with respect to a $P_2S_7$ unit in a specific composition containing Ha in addition to Li, P, and S, and have thus completed the present invention. As one method for obtaining a homogeneous sulfide solid electrolyte having high lithium ion conductivity, a production method in which a raw material is melted and quenched has been found.

That is, the present invention relates to the following [1] to [12].

[1] A sulfide solid electrolyte including a sulfide glass phase, in which the sulfide solid electrolyte includes a $PS_4$ unit and a $P_2S_7$ unit, a ratio of a peak intensity $I_{(PS4)}$ of the $PS_4$ unit and a peak intensity $I_{(P2S7)}$ of the $P_2S_7$ unit in a Raman spectrum satisfies a relationship of $0.05 < \{I_{(P2S7)}/I_{(PS4)}\} < 1.00$, the sulfide solid electrolyte includes Li, P, S, and Ha as constituent elements, the Ha is a halogen element, and contents of the constituent elements in terms of at% are as follows: Li: 30% to 50%, P: 5% to 15%, and S: 30% to 60%.

[2] The sulfide solid electrolyte according to [1], in which the Ha includes at least one selected from the group consisting of F, Cl, Br and I, and the contents of the constituent elements in terms of at% are as follows: Li: 30% to 50%, P: 5% to 12%, S: 30% to 50%, and Ha: 2% to 10%.

[3] The sulfide solid electrolyte according to [1] or [2], further including a $P_2S_6$ unit, in which a ratio of a peak intensity $I_{(P2S6)}$ of the $P_2S_6$ unit and the peak intensity $I_{(P2S7)}$ of the $P_2S_7$ unit in the Raman spectrum satisfies a relationship of $0.5 < \{I_{(P2S7)}/I_{(P2S6)}\} < 10$.

[4] The sulfide solid electrolyte according to [1] or [2], in which a ratio of the contents of Li and P among the constituent elements in terms of at% satisfies a relationship of $2.5 \leq (Li/P) \leq 7$.

[5] The sulfide solid electrolyte according to [1] or [2], in which the sulfide solid electrolyte has a peak in a wavenumber region of $150\ cm^{-1}$ to $180\ cm^{-1}$ in the Raman spectrum, and a full width at half maximum of the peak is $20\ cm^{-1}$ or more.

[6] The sulfide solid electrolyte according to [1] or [2], in which a content of the sulfide glass phase is 50 wt% or more.

[7] The sulfide solid electrolyte according to [1] or [2], which is used in a lithium-ion secondary battery.

[8] A method for producing a sulfide solid electrolyte, the method including: mixing raw materials containing a lithium element, a sulfur element, and a phosphorus element to obtain a raw material mixture; heating and melting the raw material mixture in a gas atmosphere containing a sulfur element to obtain a molten material; and quenching the molten material to obtain a solid, in which a ratio of contents of the lithium element and the phosphorus element in terms of at% in the raw material mixture is $Li/P \geq 2.5$, and a cooling rate in the quenching is 500°C/sec or more.

[9] The method for producing a sulfide solid electrolyte according to [8], further including mixing a raw material containing a halogen element to obtain the raw material mixture.

[10] The method for producing a sulfide solid electrolyte according to [8] or [9], in which a heating temperature in the heating and melting is 600°C to 950°C.

[11] The method for producing a sulfide solid electrolyte according to [8] or [9], in which contents of the elements in terms of at% when mixing the raw materials are as follows: Li: 30% to 50%, P: 5% to 15%, and S: 30% to 60%.

[12] The method for producing a sulfide solid electrolyte according to [8] or [9], in which contents of the elements in terms of at% when mixing the raw materials are as follows: Li: 30% to 50%, P: 5% to 12%, S: 30% to 50%, and Ha: 2% to 10%.

ADVANTAGEOUS EFFECTS OF INVENTION

According to the sulfide solid electrolyte according to the present invention, high lithium ion conductivity can be implemented even though a sulfide glass phase is contained. Therefore, the sulfide solid electrolyte is very useful as a solid electrolyte for a lithium-ion secondary battery, and accordingly, it is expected to improve battery characteristics of the lithium-ion secondary battery.

BRIEF DESCRIPTION OF DRAWINGS

FIG. 1 is a flow diagram showing a method for producing a sulfide solid electrolyte according to the present embodiment.

FIG. 2 is a flow diagram showing a method for producing a sulfide solid electrolyte according to the present embodiment.

FIG. 3 is a flow diagram showing a method for producing a sulfide solid electrolyte according to the present embodiment.

FIG. 4 shows a Raman spectrum of a sulfide solid electrolyte in Example 1.

FIG. 5 shows the Raman spectrum of the sulfide solid electrolyte in Example 1 and a corrected spectrum with baseline correction.

FIG. 6 shows a corrected spectrum with baseline correction on the Raman spectrum of the sulfide solid electrolyte in Example 1, three spectra obtained by peak separation from the corrected spectrum, and a calculated spectrum obtained by summing up the three spectra.

FIG. 7 shows a corrected spectrum with baseline correction on a Raman spectrum of a sulfide solid electrolyte in Example 2, three spectra obtained by peak separation from the corrected spectrum, and a calculated spectrum obtained by summing up the three spectra.

FIG. 8 shows a corrected spectrum with baseline correction on a Raman spectrum of a sulfide solid electrolyte in Example 3, three spectra obtained by peak separation from the corrected spectrum, and a calculated spectrum obtained by summing up the three spectra.

## DESCRIPTION OF EMBODIMENTS

Hereinafter, the present invention is described in detail, but the present invention is not limited to the following embodiment and can be freely modified and implemented without departing from the gist of the present invention. In addition, the symbol "-" or the word "to" that is used to express a numerical range includes the numerical values before and after the symbol or the word as the upper limit value and the lower limit value of the range, respectively. In the present description, at% means atomic%, that is, atomic percentage.

<Sulfide Solid Electrolyte>

A sulfide solid electrolyte according to the present embodiment (hereinafter, may be simply referred to as "solid electrolyte") contains a sulfide glass phase.

The sulfide solid electrolyte contains a $PS_4$ unit and a $P_2S_7$ unit, and a ratio of a peak intensity $I_{(PS4)}$ of the $PS_4$ unit and a peak intensity $I_{(P2S7)}$ of the $P_2S_7$ unit in a Raman spectrum satisfies a relationship of $0.05 < \{I_{(P2S7)}/I_{(PS4)}\} < 1.00$.

The sulfide solid electrolyte contains Li, P, S, and Ha as constituent elements, and the Ha is a halogen element. Contents of Li, P, and S in terms of at% are as follows: Li: 30% to 50%, P: 5% to 15%, and S: 30% to 60%.

The $PS_4$ unit is a $PS_4$ tetrahedral unit having a Q0 structure represented by $PS_4^{3-}$. The $PS_4$ unit has a peak at a wavenumber of 415 $cm^{-1}$ to 425 $cm^{-1}$ in the Raman spectrum.

The $P_2S_7$ unit is a dimeric unit having a Q1 structure represented by $P_2S_7^{4-}$ in which two $PS_4$ tetrahedrons are linked. The $P_2S_7$ unit has a peak at a wavenumber of 402 $cm^{-1}$ to 412 $cm^{-1}$ in the Raman spectrum.

When the sulfide solid electrolyte contains the $PS_4$ unit, a conductive path for lithium ions can be formed. When the sulfide solid electrolyte contains the $P_2S_7$ unit, a vitrification range can be expanded.

According to the studies by the present inventors, it has been found that, by mainly containing a $PS_4$ unit with respect to a $P_2S_7$ unit in a specific composition containing Ha in addition to Li, P, and S, high lithium ion conductivity can be implemented even in a solid electrolyte containing a sulfide glass.

Mainly containing the $PS_4$ unit with respect to the $P_2S_7$ unit means that the ratio of the peak intensity $I_{(PS4)}$ of the $PS_4$ unit and the peak intensity $I_{(P2S7)}$ of the $P_2S_7$ unit in the Raman spectrum satisfies the relationship of $0.05 < \{I_{(P2S7)}/I_{(PS4)}\} < 1.00$.

The effect of the present invention is achieved when the sulfide glass phase contained in the solid electrolyte according to the present embodiment mainly contains the $PS_4$ unit with respect to the $P_2S_7$ unit in the specific composition containing Ha in addition to Li, **P**, and S. However, as described later, the solid electrolyte may be composed only of the sulfide glass phase, or may include a crystal phase in addition to the sulfide glass phase. When the solid electrolyte contains a crystal phase, the $P_2S_7$ unit or $PS_4$ unit constituting the glass phase cannot be distinguished from the $P_2S_7$ unit or $PS_4$ unit constituting the crystal phase. Therefore, when the solid electrolyte has a specific composition containing Ha in addition to Li, **P**, and S, and mainly contains the $PS_4$ unit with respect to the $P_2S_7$ unit, the sulfide glass phase can be considered to have the same composition and mainly contains the $PS_4$ unit with respect to the $P_2S_7$ unit.

When the ratio represented by $\{I_{(P2S7)}/I_{(PS4)}\}$ is more than 0.05, a vitrification effect of the $P_2S_7$ unit is easily obtained, and the sulfide glass phase is easily obtained. That is, the sulfide glass phase can be obtained at an appropriate quenching rate and large-scale equipment for quenching is not required, which is preferable. When the solid electrolyte according to the present embodiment is mass-produced by a melt quenching method to be described later, the obtained sulfide glass phase may contain the $P_2S_7$ unit.

On the other hand, when the ratio represented by $\{I_{(P2S7)}/I_{(PS4)}\}$ is less than 1.00, a conductive path for lithium ions can be well formed by the $PS_4$ unit, and high lithium ion conductivity can be implemented.

The above ratio can be implemented, for example, by melting a raw material mixture while preventing volatilization of a raw material including P and then quenching the mixture at a cooling rate faster than that in the related art when obtaining the sulfide solid electrolyte.

The ratio represented by $\{I_{(P2S7)}/I_{(PS4)}\}$ may be more than 0.05 and less than 1.00, and is preferably 0.1 to 0.9, and more preferably 0.12 to 0.7. Here, a lower limit of the above ratio is more than 0.05, preferably 0.1 or more, and more preferably 0.12 or more. An upper limit of the above ratio is less than 1.00, preferably 0.9 or less, and more preferably 0.7 or less.

The peak intensities $I_{(PS4)}$ and $I_{(P2S7)}$ of the $PS_4$ unit and the $P_2S_7$ unit in the Raman spectra are determined as follows.

First, the sulfide solid electrolyte is pulverized in a mortar and passed through a 100 $\mu$m sieve to produce a solid electrolyte powder having an average particle diameter D50 of about 20 $\mu$m. In the present description, the average particle diameter D50 refers to a median diameter determined from a volume-based particle size distribution chart obtained by measuring a particle size distribution using a particle size distribution meter using a laser diffraction method, which means a particle diameter at which 50 vol% of particles has a particle diameter equal to or less than the value.

The obtained solid electrolyte powder is used as a pellet-shaped pressurized powder, and Raman spectrum measurement is performed at any 10 points in an air non-exposure environment. Measurement conditions are as follows: excitation wavelength: 532 nm, power when irradiating sample: 5 mW, objective lens: 10x, numerical aperture: 0.25, confocal pinhole: 200 $\mu$m, grating: 1200 gr/mm, measurement time: 3 seconds x 10 times, spot diameter: 3 $\mu$m.

The obtained spectrum is subjected to baseline correction to obtain a corrected spectrum. Peak separation is performed on the corrected spectrum using a function obtained by mixing a Gauss function and a Lorentz function. The mixed function is expressed as

$$f(x) = (1\text{-}M)(\text{Gauss function}) + (M)(\text{Lorentz function})$$

using the Gauss function and the Lorentz function, and a value of M, which represents a mixing ratio of the functions (% Lorentz function), is set to 0.25.

A baseline for peak separation is drawn in a region of 330 cm$^{-1}$ to 460 cm$^{-1}$. Then, a full width at half maximum is fixed at 15 cm$^{-1}$ for a peak having a peak top at a wavenumber of 415 cm$^{-1}$ to 425 cm$^{-1}$, at 15 cm$^{-1}$ for a peak having a peak top at a wavenumber of 402 cm$^{-1}$ to 412 cm$^{-1}$, and at 22 cm$^{-1}$ for a peak having a peak top at a wavenumber of 383 cm$^{-1}$ to 393 cm$^{-1}$ to perform the peak separation. After that, optimization is performed using the least squares method such that a difference between a spectrum with the baseline drawn and a calculated spectrum obtained by summing up the peaks resulting from the peak separation is minimized. The value of the full width at half maximum is fixed at the above value in the present measurement system, but may be changed depending on the spectrum for analysis.

After the peak separation, a peak having a peak top at a wavenumber of 415 cm$^{-1}$ to 425 cm$^{-1}$ is defined as a peak of the $PS_4$ unit, and a peak having a peak top at a wavenumber of 402 cm$^{-1}$ to 412 cm$^{-1}$ is defined as a peak of the $P_2S_7$ unit.

The peak intensity of each peak is an intensity of the peak top, that is, the highest intensity of each peak.

The sulfide solid electrolyte according to the present embodiment may further include a $P_2S_6$ unit. The $P_2S_6$ unit is a unit having a structure lacking S, which is represented by $P_2S_6^{4-}$. The $P_2S_6$ unit has a peak at a wavenumber of 383 cm$^{-1}$ to 393 cm$^{-1}$ in the Raman spectrum.

When the sulfide solid electrolyte contains the $P_2S_6$ unit, a ratio of a peak intensity $I_{(P2S6)}$ of the $P_2S_6$ unit and the peak intensity $I_{(P2S7)}$ of the $P_2S_7$ unit in the Raman spectrum $\{I_{(P2S7)}/I_{(P2S6)}\}$ is preferably more than 0.5 and less than 10, more preferably 1.0 to 9.0, and still more preferably 1.5 to 8.0. Here, since the $P_2S_6$ unit is a unit that reduces lithium ion conductivity, the above ratio is preferably more than 0.5, more preferably 1.0 or more, and still more preferably 1.5 or more. Since the $P_2S_6$ unit is also a unit that promotes vitrification, the above ratio is preferably less than 10, more preferably 9.0 or less, and still more preferably 8.0 or less.

The above ratio can be implemented, for example, by melting a raw material mixture while preventing volatilization of a raw material including P and quenching the mixture at a cooling rate faster than that in the related art when obtaining the sulfide solid electrolyte.

The sulfide solid electrolyte according to the present embodiment preferably has a peak in a wavenumber region of 150 cm$^{-1}$ to 180 cm$^{-1}$ in the Raman spectrum, and the full width at half maximum of such a peak is more preferably 20 cm$^{-1}$ or more.

Although details of the peak have not been clarified, as shown in Examples to be described later, a solid electrolyte having a peak with a full width at half maximum of 20 cm$^{-1}$ or more in a wavenumber range of 150 cm$^{-1}$ to 180 cm$^{-1}$ has high lithium ion conductivity. A sulfide solid electrolyte having a high proportion of the sulfide glass phase exhibits a strong broad peak. The above full width at half maximum is more preferably 22 cm$^{-1}$ or more, and still more preferably 25 cm$^{-1}$ or more. An upper limit of the full width at half maximum is not particularly limited as long as it can be recognized as a peak, and is, for example, 50 cm$^{-1}$ or less.

The full width at half maximum in the Raman spectrum is an index indicating a degree of peak broadening, and is a width between wavenumbers that shows half the intensity of the peak top. A wider full width at half maximum, i.e., a broader peak, indicates a lower degree of crystallinity and a higher proportion of the sulfide glass phase.

Elements constituting the sulfide solid electrolyte according to the present embodiment include Li, P, S, and Ha. Ha is a halogen element, and may contain only one kind or two or more kinds thereof.

Specifically, contents of the constituent elements in terms of at% satisfy: Li: 30% to 50%, P: 5% to 15%, and S: 30% to 60%, and preferably satisfy Li: 30% to 50%, P: 5% to 12%, S: 30% to 50%, and Ha: 2% to 10%.

The respective constituent elements are described below.

P is an element that forms a glass network, and in sulfides, a P-S bond has high resistance to both oxidation and reduction. Therefore, the solid electrolyte has a wide potential window and excellent electrochemical stability. A content of P is 5% to 15%, preferably 6% to 13%, and more preferably 7% to 12%, in terms of at%. The content of P is 5% or more, preferably 6% or more, and more preferably 7% or more, from the viewpoint of widening the vitrification range. The content of P is 15% or less, preferably 13% or less, and more preferably 12% or less, from the viewpoint of increasing the lithium ion conductivity.

Li is an element responsible for ion conduction of the solid electrolyte. A content of Li is 30% to 50%, preferably 35% to 45%, and more preferably 37% to 43%, in terms of at%. The content of Li is 30% or more, preferably 35% or more, and more preferably 37% or more, from the viewpoint of increasing the lithium ion conductivity. The content of Li is 50% or less, preferably 45% or less, and more preferably 43% or less, from the viewpoint of widening the vitrification range.

S is an element that forms a P-S bond together with **P,** and is an essential element for forming a glass phase. A content of S is 30% to 60%, preferably 33% to 50%, and more preferably 35% to 47%, in terms of at%. The content of S is 30% or more, preferably 33% or more, and more preferably 35% or more, from the viewpoint of widening the vitrification range. The content of S is 60% or less, preferably 50% or less, and more preferably 47% or less, from the viewpoint of increasing the lithium ion conductivity.

Ha is an element necessary for forming a sulfide glass having high lithium ion conductivity. Ha preferably contains at least one selected from the group consisting of F, Cl, Br, and **I,** and more preferably contains at least one selected from the group consisting of Cl, Br, and I.

A total content of Ha is preferably 2% to 10%, more preferably 3% to 9%, and still more preferably 3.5% to 8%, in terms of at%. The total content of Ha is preferably 2% or more, more preferably 3% or more, and still more preferably 3.5% or more, from the viewpoint of obtaining high lithium ion conductivity. The total content of Ha is preferably 10% or less, more preferably 9% or less, and still more preferably 8% or less, from the viewpoint of preventing precipitation of lithium halide crystals.

Among the constituent elements, a ratio (Li/P) of contents of Li and P in terms of at% is preferably 2.5 to 7, more preferably 3.0 to 6.5, and still more preferably 3.2 to 6.2. The above ratio is preferably 2.5 or more, more preferably 3.0 or more, and still more preferably 3.2 or more, from the viewpoint of relatively increasing the $PS_4$ units and obtaining high lithium ion conductivity. The above ratio is preferably 7 or less, more preferably 6.5 or less, and still more preferably 6.2 or less, from the viewpoint of widening the vitrification range.

The sulfide solid electrolyte according to the present embodiment may contain elements other than the above Li, P, S, and Ha as the constituent elements. Examples of the other elements that may be contained include Si, B, Ge, Al, O, Na, K, Mg, Ca, Sr, Ba, Y, Zr, Cr, Zn, Ga, Sn, and Sb.

When the other elements constitute oxides such as $SiO_2$, $B_2O_3$, $P_2O_5$, or $Al_2O_3$, such oxides are preferably not contained since the oxides serve as a crystal nucleus. A total content of the oxides is preferably 1 mol% or less, more preferably 0.1 mol% or less, and still more preferably 0.05 mol% or less, in terms of mol% based on oxides, and may be zero, that is, 0 mol%.

On the other hand, among the oxides, there are oxides serving as a glass network former, such as $SiO_2$, $B_2O_3$, $P_2O_5$, and $Al_2O_3$. When a content of these oxides is equal to or greater than a certain level, an effect of promoting a tendency of the obtained solid electrolyte to vitrify can be obtained. Therefore, when the above oxides serving as a glass network former are contained, the total content thereof is preferably 3 mol% to 20 mol%, more preferably 5 mol% to 18 mol%, and still more preferably 7 mol% to 16 mol% in terms of mol% based on oxides. Here, the above total content is preferably 3 mol% or more, more preferably 5 mol% or more, and still more preferably 7 mol% or more, from the viewpoint of promoting the vitrification tendency. The above total content is preferably 20 mol% or less, more preferably 18 mol% or less, and still more preferably 16 mol% or less, from the viewpoint of implementing high lithium ion conductivity.

When the sulfide solid electrolyte contains Si as the constituent element, a content thereof is preferably 0% to 15%, more preferably 0% to 10%, and still more preferably 0% to 5%, in terms of at%. Here, Si may be contained from the viewpoint of obtaining an effect of increasing viscosity of a melt to promote vitrification, and the content of Si is preferably 15% or less, more preferably 10% or less, and still more preferably 5% or less, from the viewpoint of electrochemical stability.

When Si has a Si-O bond or is contained as an oxide of $SiO_2$, as described above, the content of Si in terms of at% is appropriately adjusted such that the total content of oxides is 1 mol% or less, or such that the total content of oxides serving as a glass network former is 3 mol% to 20 mol%.

When the sulfide solid electrolyte contains B as the constituent element, a content thereof is preferably 0% to 15%, more preferably 0% to 10%, and still more preferably 0% to 5%, in terms of at%. Here, B may be contained from the viewpoint of obtaining an effect of increasing viscosity of a melt to promote vitrification, and the content of B is preferably 15% or less, more preferably 10% or less, and still more preferably 5% or less, from the viewpoint of lithium ion conductivity.

When B has a B-O bond or is contained as an oxide of $B_2O_3$, as described above, the content of B in terms of at% is appropriately adjusted such that the total content of oxides is 1 mol% or less, or such that the total content of oxides serving as a glass network former is 3 mol% to 20 mol%.

When the sulfide solid electrolyte contains P as the constituent element, P is basically present in a state of a P-S bond, but may also partially contain a P-O bond. Although an effect of a crystal nucleus of P-O is not well known, P-O may act as a glass network former. A content of P in terms of at% is 5% to 15% as described above, and a part thereof may form a P-O bond.

A proportion of P forming a P-O bond to a total content of P is preferably 0% to 5% or 15% to 50%, more preferably more than 0% and 4% or less or 15% to 40%, and still more preferably 0.01% to 2% or 15% to 30%. Here, the smaller the proportion of P forming a P-O bond, the better, since formation of crystal nuclei can be avoided. The content of P is preferably 0% to 5% within an industrially feasible range, and from the viewpoint, the content of P is more preferably more than 0%, and still more preferably 0.01% or more. The above content is more preferably 4% or less, and still more preferably 2% or less, from the viewpoint of avoiding the formation of crystal nuclei. The above proportion of P is preferably 15% or more from the viewpoint of forming a network former and promoting vitrification. The above proportion of P is preferably 50% or less, more preferably 40% or less, and still more preferably 30% or less, from the viewpoint of lithium ion conductivity. The proportion of P forming a P-O bond to the total content of P is determined by $^{31}$P-NMR.

When the sulfide solid electrolyte contains Al as the constituent element, a content thereof is preferably 0% to 15%, more preferably 0% to 10%, and still more preferably 0% to 5%, in terms of at%. Here, Al may be contained from the viewpoint of obtaining an effect of increasing viscosity of a melt to promote vitrification, and the content of Al is preferably 15% or less, more preferably 10% or less, and still more preferably 5% or less, from the viewpoint of lithium ion conductivity.

When Al has an Al-O bond or is contained as an oxide of $Al_2O_3$, as described above, the content of Al in terms of at% is appropriately adjusted such that the total content of oxides is 1 mol% or less, or such that the total content of oxides serving as a glass network former is 3 mol% to 20 mol%.

When the sulfide solid electrolyte contains O as the constituent element, a content of O is preferably such that the total content of oxides is 1 mol% or less, or the content of O is preferably such that the total content of oxides serving as a glass network former is 3 mol% to 20 mol%.

Therefore, the content of O in terms of at% varies depending on types of other constituent elements, and the like, and is preferably 1% or less, more preferably 0.5% or less, and still more preferably 0.1% or less, from the viewpoint of preventing formation of a crystal containing an oxide as a nucleus. The smaller the content of O, the more preferred, and the content of O may be zero, that is, 0%.

On the other hand, the content of O in terms of at% varies depending on types of other constituent elements and the like, and is preferably 3 to 15%, more preferably 4 to 10%, and still more preferably 5 to 8% in the case of serving as a glass network former. Here, the content of O is preferably 3% or more, more preferably 4% or more, and still more preferably 5% or more, from the viewpoint of promoting vitrification. On the other hand, the content of O is preferably 15% or less, more preferably 10% or less, and still more preferably 8% or less, from the viewpoint of lithium ion conductivity.

When the sulfide solid electrolyte contains Zr as the constituent element, a content thereof is preferably 0% to 15%, more preferably 0% to 10%, and still more preferably 0% to 5%, in terms of at%. Here, Zr may be contained from the viewpoint of obtaining an effect of increasing viscosity of a melt to promote vitrification, and the content of Zr is preferably 15% or less, more preferably 10% or less, and still more preferably 5% or less, from the viewpoint of lithium ion conductivity.

Zr does not serve as a glass network former, but when Zr has a Zr-O bond or is contained as an oxide of $ZrO_2$, Zr has an effect of increasing viscosity of a melt to promote vitrification. From the above viewpoint, the content of Zr in terms of at% is appropriately adjusted such that the total content of oxides is 3 mol% to 20 mol%. Alternatively, as described above, the content of Zr in terms of at% is appropriately adjusted such that the total content of oxides is 1 mol% or less so as not to form a crystal nucleus.

A total content of the other elements, such as Sn and Sb, is preferably 0% to 15%, more preferably 0% to 10%, and still more preferably 0% to 5%, in terms of at%, in the same manner as Zr. Here, for example, the other elements such as Sn and Sb may be contained from the viewpoint of having an effect of increasing viscosity of a melt to promote vitrification, and the total content is preferably 15% or less, more preferably 10% or less, and still more preferably 5% or less, from the viewpoint of lithium ion conductivity.

When the other elements are bonded to O or are contained as oxides, the other elements have an effect of increasing viscosity of a melt to promote vitrification. From the above viewpoint, when the other elements are contained, the total content thereof is preferably 3% or more, more preferably 5% or more, and still more preferably 8% or more, and the total content of the other elements in terms of at% is appropriately adjusted such that the total content of oxides is 3 mol% to 20 mol%. Alternatively, as described above, in order to prevent oxides from becoming a crystal nucleus, the other elements may not be substantially contained, for example, may be contained at 1 at% or less.

As described above, the sulfide glass phase contains Li, P, S, and Ha as the constituent elements in specific ranges, and mainly contains the $PS_4$ unit with respect to the $P_2S_7$ unit.

A content of the sulfide glass phase in the solid electrolyte is preferably 50 wt% or more, more preferably 70 wt% or more, and still more preferably 80 wt% or more, from the viewpoint of contact between electrolytes, contact between an electrolyte and an active material, composition homogeneity, and the like. The content of the sulfide glass phase in the solid electrolyte may be 100 wt%, that is, the solid electrolyte may consist only of the sulfide glass phase. On the other hand, from the viewpoint of reducing the production load and promoting the crystallization rate in the next step, a crystal phase may be contained. In that case, the content of the sulfide glass phase is preferably 99 wt% or less, more preferably 95 wt% or less, and still more preferably 90 wt% or less. The content of the sulfide glass phase is 50 wt% to 100 wt% in one aspect, 70 wt% to 99 wt% in another aspect, and 80 wt% to 95 wt% in yet another aspect.

The content of the sulfide glass phase can be determined by powdering the obtained electrolyte, performing powder X-ray diffraction (XRD) measurement together with a crystal powder serving as an internal standard, and performing Rietveld analysis.

The sulfide solid electrolyte according to the present embodiment is suitable as an electrolyte of a lithium-ion secondary battery. The sulfide solid electrolyte according to the present embodiment has a wide potential window and is not easily oxidized and decomposed even on a high potential side. Therefore, it is also preferable to use the sulfide solid electrolyte together with a positive electrode having an operating potential of about 4 V, called a 4V class positive electrode, or a positive electrode having an operating potential of about 5 V, called a 5V class positive electrode.

The lithium ion conductivity of the sulfide solid electrolyte according to the present embodiment is preferably more than $1.0 \times 10^{-4}$ S/cm, more preferably $3.0 \times 10^{-4}$ S/cm or more, and still more preferably $5.0 \times 10^{-4}$ S/cm or more, from the viewpoint of battery characteristics when used in a lithium-ion secondary battery.

**In** the present description, the lithium ion conductivity is a value measured by the following method. First, the sulfide solid electrolyte is pulverized in a mortar and passed through a 100 $\mu$m sieve to obtain a solid electrolyte powder having an average particle diameter D50 of about 20 $\mu$m. The obtained solid electrolyte powder is compressed at a pressure of 380 kN to prepare a measurement sample as a powder compact. Using an AC impedance measuring device, an AC impedance of the measurement sample is measured at a measurement frequency of 100 Hz to 1 MHz, a measurement voltage of 100 mV, and a measurement temperature of 25°C, and the value obtained from the obtained Nyquist plot is regarded as the lithium ion conductivity.

When the sulfide solid electrolyte is used for a lithium-ion secondary battery, the sulfide solid electrolyte forms a solid electrolyte layer together with other components such as a binder as necessary. As the binder or other components, known substances according to the related art can be used.

A content of the solid electrolyte with respect to the entire solid electrolyte layer is preferably 80 mass% or more, and more preferably 90 mass% or more.

The solid electrolyte may be mixed with a positive electrode active material or a negative electrode active material to be used as a positive electrode layer or a negative electrode layer. As the positive electrode active material or negative electrode active material used for the positive electrode layer or negative electrode layer, a current collector, a binder, a conductive aid, and the like, known materials according to the related art can be used.

A lithium-ion secondary battery for which the solid electrolyte is to be used includes the above solid electrolyte layer, positive electrode layer, and negative electrode layer.

As a material of an outer casing of the lithium-ion secondary battery, known materials according to the related art may also be used. As a shape of the lithium-ion secondary battery, known shapes according to the related art may be used, and examples of the shape of the lithium-ion secondary battery include a coin shape, a sheet shape (film shape), a folded shape, a wound cylindrical shape with a bottom, and a button shape. The shape thereof can be appropriately selected according to the application.

<Method for Producing Sulfide Solid Electrolyte>

A method for producing a sulfide solid electrolyte according to the present embodiment is not particularly limited as long as the solid electrolyte described in the <Sulfide Solid Electrolyte> is obtained. On the other hand, in the past, when attempting to obtain a sulfide solid electrolyte containing a sulfide glass phase, it is difficult to implement a structure mainly containing a $PS_4$ unit with respect to a $P_2S_7$ unit, and the $P_2S_7$ unit is mainly contained. In particular, in a system containing the halogen element as an element constituting a sulfide solid electrolyte, a method of obtaining a sulfide solid electrolyte containing a sulfide glass phase and mainly containing a $PS_4$ unit has not been known.

In contrast, the inventors have found that, as one aspect of the production method, a solid electrolyte mainly containing a $PS_4$ unit and containing a homogeneous sulfide glass can be obtained by obtaining a molten material of a raw material mixture and then performing quenching, even when the halogen element is contained, and high lithium ion conductivity can also be implemented.

That is, as one aspect of the method for producing a sulfide solid electrolyte according to the present embodiment, a production method i includes the following steps 1 to 3 in order.

Step 1: A step of mixing raw materials containing a lithium element, a sulfur element, and a phosphorus element to obtain a raw material mixture.

Step 2: A step of heating and melting the raw material mixture in a gas atmosphere containing a sulfur element to obtain a molten material.

Step 3: A step of quenching the above molten material to obtain a solid.

A ratio of contents of the lithium element and the phosphorus element in terms of at% in the raw material mixture obtained in step 1 is set to Li/P $\geq$ 2.5.

A cooling rate of the quenching in step 3 is 500°C/sec or more.

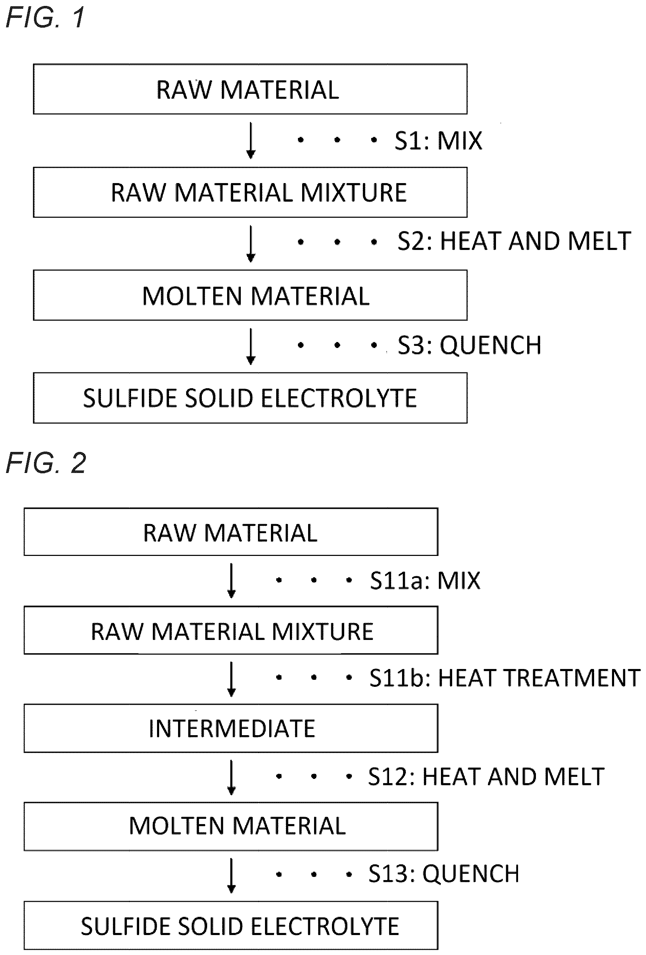

That is, as shown in FIG. 1, step 1 is a step of mixing raw materials as step S1, step 2 is a step of heating and melting the raw material mixture obtained in step 1 as step S2, and step 3 is a step of quenching the molten material obtained in step 2 as step S3.

In step 1, it is preferable to further contain a raw material containing a halogen element. That is, step 1 in the production method i is preferably the following step 1'.

Step 1': A step of mixing raw materials containing lithium element, a sulfur element, a phosphorus element, and a halogen element to obtain a raw material mixture.

One aspect of the above production method i is a production method a including the following steps a1-1, a1-2, a2 and a3 in order.

Step a1-1: A step of mixing raw materials containing a lithium element, a sulfur element, and a phosphorus element to obtain a raw material mixture.

Step a1-2: A step of subjecting the raw material mixture to a heat treatment to obtain an intermediate.

Step a2: A step of heating and melting the intermediate in a gas atmosphere containing a sulfur element to obtain a molten material.

Step a3: A step of quenching the molten material to obtain a solid.

Here, the raw materials are mixed such that a ratio of contents of the lithium element and the phosphorus element in terms of at% in the raw material mixture obtained in step a1-1 satisfies Li/P $\geq$ 2.5. A cooling rate of the quenching in step a3 is 500°C/sec or more.

As one aspect of the production method a, in the mixing of the raw materials in step a1-1, a raw material containing a halogen element is further mixed to obtain the above raw material mixture, or in step a2, a raw material containing a halogen element is mixed with the intermediate, and then the mixture is heated and melted to obtain the above molten material.

One aspect of the production method i is a production method b including the following steps b1-1, b1-2, b2, and b3 in order.

Step b1-1: A step of mixing raw materials containing a lithium element, a sulfur element, and a phosphorus element to obtain a raw material mixture.

Step b1-2: A step of sealing the above raw material mixture in a sealed container.

Step b2: A step of heating the above sealed container and heating and melting the raw material mixture to obtain a molten material.

Step b3: A step of removing the above molten material from the sealed container and simultaneously quenching the molten material to obtain a solid.

Here, the raw materials are mixed such that a ratio of contents of the lithium element and the phosphorus element in terms of at% in the raw material mixture obtained in step b1-1 satisfies Li/P $\geq$ 2.5. A cooling rate of the quenching in step b3 is 500°C/sec or more.

As one aspect of the production method b, in the mixing of the raw materials in step b1-1, a raw material containing a halogen element is further mixed to obtain the above raw material mixture.

The details of the above production method i are described in detail using the production method a and the production method b.

<<Production Method a>>

- Step a1

As shown in FIG. 2, step a1-1 in the production method a is a step of mixing raw materials as step S11a. Specifically, raw materials containing a lithium element, a sulfur element, and a phosphorus element are mixed to obtain a raw material mixture. In addition to the above, it is also preferable to mix a raw material containing a halogen element to obtain a raw material mixture.

When the raw material containing a halogen element is also used, the raw material containing a halogen element may be contained in the intermediate in an intact state without reacting when the intermediate is obtained by a heat treatment in subsequent step a1-2. Therefore, in the production method according to the present embodiment, after the raw material mixture not including the raw material containing a halogen element is subjected to the heat treatment in subsequent step a1-2 to obtain an intermediate, the raw material containing a halogen element may be mixed with the intermediate to obtain a molten material by heating and melting in step a2.

As such raw materials, in addition to elemental Li or a compound containing Li, elemental S or a compound containing S, and elemental P or a compound containing P, a compound containing Ha as desired can be appropriately combined and used. The above compound may be a compound containing two or more kinds selected from the group consisting of Li, S, P, and Ha. For example, phosphorus pentasulfide ($P_2S_5$) may be used as a compound serving as both the compound containing S and the compound containing P. Lithium halide may be used as a compound serving as both the compound containing Li and the compound containing Ha.

As the raw material containing the Li element, in addition to metallic lithium, a compound containing Li including lithium compounds such as lithium sulfide ($Li_2S$), lithium carbonate ($Li_2CO_3$), lithium sulfate ($Li_2SO_4$), lithium oxide ($Li_2O$), and lithium hydroxide (LiOH) may be used.

The raw material containing the Li element is preferably lithium sulfide from the viewpoint of ease of synthesis of an intermediate to be described later and ease of handling. On the other hand, since lithium sulfide is expensive, it is preferable to use a lithium compound other than lithium sulfide, metallic lithium, or the like, from the viewpoint of reducing the production cost. Specifically, it is preferable to use one or more selected from the group consisting of metallic lithium, lithium carbonate ($Li_2CO_3$), lithium sulfate ($Li_2SO_4$), lithium oxide ($Li_2O$), and lithium hydroxide (LiOH). These may be used alone or in combination of two or more kinds thereof.

As the raw material containing the S element, in addition to elemental sulfur, a compound containing S including phosphorus sulfides such as phosphorus trisulfide ($P_2S_3$) and phosphorus pentasulfide ($P_2S_5$), other sulfur compounds containing phosphorus, and a compound containing sulfur may be used. Examples of the compound containing sulfur include $H_2S$, $CS_2$, iron sulfides such as FeS, $Fe_2S_3$, $FeS_2$, or $Fe_{1-x}S$, bismuth sulfide ($Bi_2S_3$), and copper sulfides such as CuS, $Cu_2S$, or $Cu_{1-x}S$.

The raw material containing the S element is preferably phosphorus sulfide, and more preferably phosphorus pentasulfide ($P_2S_5$), from the viewpoint of ease of reaction when synthesizing an intermediate to be described later and preventing incorporating of elements other than elements constituting the target sulfide solid electrolyte. These may be used alone or in combination of two or more kinds thereof. Phosphorus sulfide can be considered as a compound serving as both the substance containing S and the substance containing P.

As the raw material containing the P element, in addition to elemental phosphorus, a compound containing P including phosphorus sulfides such as phosphorus trisulfide ($P_2S_3$) and phosphorus pentasulfide ($P_2S_5$), and a phosphorus compound such as lithium thiophosphate ($Li_3PS_{4-x}O_x$) may be used.

The raw material containing the P element is preferably phosphorus sulfide, and more preferably phosphorus pentasulfide ($P_2S_5$), from the viewpoints of ease of reaction when synthesizing an intermediate to be described later and preventing incorporating of elements other than elements constituting the target sulfide solid electrolyte. These may be used alone or in combination of two or more kinds thereof.

When an oxide is contained as the raw material containing the P element, examples thereof include $P_2O_5$, $Li_3PO_4$, and $Li_4P_2O_7$. Among them, $P_2O_5$ is preferred from the viewpoint of ease of production. These compounds may be used alone or in combination of two or more kinds thereof.

Examples of the compound containing Ha, which is a raw material containing the Ha element, include lithium halides such as lithium fluoride (LiF), lithium chloride (LiCl), lithium bromide (LiBr), and lithium iodide (LiI), phosphorus halides, phosphoryl halides, sulfur halides, sodium halides, and boron halides.

The raw material containing the Ha element is preferably lithium halides, and more preferably LiCl, LiBr, and LiI, from the viewpoint of preventing incorporating of elements other than the elements constituting the target sulfide solid electrolyte. These compounds may be used alone or in combination of two or more kinds thereof.

The lithium halide may also be a compound containing Li. When the raw material contains lithium halide, some or all of Li in the raw material may be derived from the lithium halide.

When the raw material contains the halogen element, a molar equivalent of Ha with respect to P in the raw material is preferably 0.1 molar equivalents to 4 molar equivalents, and more preferably 0.2 molar equivalents to 3 molar equivalents. Here, the molar equivalent of Ha is preferably 0.1 molar equivalents or more, and more preferably 0.2 molar equivalents or more, from the viewpoint of lowering a melting point when the intermediate is heated and melted. The molar equivalent of Ha is preferably 4 molar equivalents or less, and more preferably 3 molar equivalents or less, from the viewpoint of stability of the obtained sulfide solid electrolyte.

When elements other than Li, S, P, and Ha are also contained as the elements constituting the sulfide solid electrolyte, the raw materials containing other elements are also mixed to obtain a raw material mixture.

Similar to the raw material containing the Ha element, the raw materials containing other elements may be mixed together to obtain a raw material mixture at the time of mixing the raw materials in step a1-1, or may be mixed with the intermediate and melted together with the intermediate to obtain a molten material in step a2.

The raw materials containing other elements are described.

Examples of the raw material containing the Si element include $SiO_2$ and $SiS_2$. Among them, $SiO_2$ is more preferred from the viewpoint of lithium ion conductivity and the water resistance. These compounds may be used alone or in combination of two or more kinds thereof.

Examples of the raw material containing the B element include $B_2O_3$ and $B_2S_3$. Among them, $B_2O_3$ is more

preferred from the viewpoint of the water resistance of the glass. These compounds may be used alone or in combination of two or more kinds thereof.

Examples of the raw material containing the Al element include $Al_2S_3$, $Al_2O_3$, and $AlCl_3$. Among them, $Al_2S_3$ and $AlCl_3$ are preferred, and $Al_2S_3$ is more preferred, from the viewpoint of the lithium ion conductivity and the water resistance. These compounds may be used alone or in combination of two or more kinds thereof.

Examples of the raw material containing the O element include oxides of the above elements. Among them, oxides of elements serving as a glass network formers are preferred. For example, $SiO_2$, $B_2O_3$, $P_2O_5$, and $Al_2O_3$ are preferred, and $SiO_2$ is more preferred. These compounds may be used alone or in combination of two or more kinds thereof.

The raw materials can be mixed by, for example, mixing in a mortar, mixing using a medium such as a planetary ball mill, and medium-less mixing such as a pin mill, a powder stirrer, and air flow mixing. The raw materials may be made amorphous by mixing before heating.

A proportion of mixing the raw materials is appropriately adjusted according to a composition of the target sulfide solid electrolyte or intermediate.

Therefore, a mixing ratio of the raw materials is not particularly limited, and for example, Li/P which is an at ratio of Li to P in the raw material is 2.5 or more, preferably 2.5 to 7, more preferably 3.0 to 6.5, and still more preferably 3.2 to 6.2. Here, Li/P is 2.5 or more, preferably 3.0 or more, and more preferably 3.2 or more, from the viewpoint of synthesizing the target intermediate with high accuracy and from the viewpoint of relatively increasing the number of $PS_4$ units in the obtained sulfide solid electrolyte and obtaining high lithium ion conductivity. The above ratio is preferably 7 or less, more preferably 6.5 or less, and still more preferably 6.2 or less, from the viewpoint of widening the vitrification range.

Examples of a preferred combination of the above compounds include a combination of $Li_2S$ and $P_2S_5$. When $Li_2S$ and $P_2S_5$ are combined, by setting a molar ratio Li/P of Li to P within the above range, an effect of easily preventing volatilization of the sulfur component and the phosphorus component during the heat treatment can be obtained due to a boiling point of $P_2S_5$ being lower than a melting point of $Li_2S$.

From the viewpoint of the composition of the target sulfide solid electrolyte or intermediate, it is preferable to mix the raw materials such that the contents of elements in terms of at% are as follows: Li: 30% to 50%, P: 5% to 15%, and S: 30% to 60%, and it is more preferable to mix the raw materials such that the contents of elements in terms of at% are as follows: Li: 30% to 50%, P: 5% to 12%, S: 30% to 50%, and Ha: 2% to 10%.

From the viewpoint of shortening a holding time in the heat treatment in subsequent step a1-2, that is, from the viewpoint of shortening a reaction time for synthesizing the intermediate, it is preferable to reduce a particle diameter of the raw material. When a particle diameter (D50) of the raw material is too large, the homogeneity of the sulfide solid electrolyte may be affected, and it is preferable that the particle diameter (D50) is small to some extent from such a viewpoint. Since the present production method is excellent in compositional control, for example, even when a raw material having a particle diameter which may decrease homogeneity in a production method according to the related art is used, a more homogeneous sulfide solid electrolyte can be produced in the present production method. From the viewpoint, specifically, the particle diameter (D50) of the raw material is preferably 1 mm or less, more preferably 500 $\mu$m or less, still more preferably 250 $\mu$m or less, even more preferably 100 $\mu$m or less, and particularly preferably 50 $\mu$m or less.

The smaller the particle diameter, the more preferred, but a practical lower limit is about 0.1 $\mu$m, and 1 $\mu$m or more is preferred, and 5 $\mu$m or more is more preferred. As described above, according to the present production method, even when a raw material having a relatively large particle diameter is used, a homogeneous sulfide solid electrolyte is easily obtained. In view of this, for example, from the viewpoint of preventing the production cost, the particle diameter of the raw material is preferably 10 $\mu$m or more, more preferably 100 $\mu$m or more, and still more preferably 250 $\mu$m or more.

From them, the particle diameter (D50) of the raw material is preferably 0.1 $\mu$m to 1 mm, more preferably 1 $\mu$m to 500 $\mu$m, still more preferably 5 $\mu$m to 250 $\mu$m, even more preferably 5 $\mu$m to 100 $\mu$m, and particularly preferably 5 $\mu$m to 50 $\mu$m. From the viewpoint of the production cost, the particle diameter (D50) of the raw material is preferably 10 $\mu$m to 1 mm, more preferably 100 $\mu$m to 1 mm, and still more preferably 250 $\mu$m to 500 $\mu$m.

The raw material may be a mixture of a plurality of compounds as described above. The raw material may be a mixture of a plurality of substances having different particle diameters. In this case, it is preferable that the particle diameter of each substance is within the above range.

In the present specification, the particle diameter (D50) of the raw material refers to a median diameter (D50) determined from a chart of a volume-based particle size distribution obtained by measuring a particle size distribution using a laser diffraction particle size distribution analyzer MT 3300 EXII manufactured by Microtrac.

- Step a1-2

As shown in FIG. 2, step a1-2 is a step of subjecting the raw material mixture obtained in step a1-1 to a heat treatment as step S11b to obtain an intermediate.

A specific method during the heat treatment is not particularly limited, and examples thereof include a method in which a raw material mixture is put into a heat-resistant container and heated in a heating furnace. The heat-resistant container is not particularly limited, and examples thereof include a heat-resistant container made of carbon, a heat-resistant container containing an oxide such as quartz, quartz glass, borosilicate glass, aluminosilicate glass, alumina, zirconia, and mullite, a heat-resistant container containing a nitride such as silicon nitride and boron nitride, and a heat-resistant container containing a carbide such as silicon carbide. Further, these heat-resistant containers may have a bulk formed of the above-described material, or may be a container in which a layer of carbon, an oxide, a nitride, a carbide, or the like is formed.

In the heat treatment, a temperature for heating the raw material mixture is preferably 250°C to 500°C, more preferably 255°C to 450°C, and still more preferably 260°C to 400°C. Here, the temperature for heating the raw material mixture is preferably 250°C or higher, more preferably 255°C or higher, and still more preferably 260°C or higher, from the viewpoint of facilitating the progress of the synthesis reaction for obtaining the intermediate. The temperature for heating the raw material mixture is preferably 500°C or lower, more preferably 450°C or lower, and still more preferably 400°C or lower, from the viewpoint of preventing the volatilization of the low boiling point components such as $P_2S_5$ in the raw material and facilitating the progress of the reaction for synthesizing the intermediate containing the compound of the target composition.

In order to obtain an intermediate by the heat treatment, it is preferable to hold the temperature within the preferred range for a certain period of time. It is more preferable that the temperature range for holding be within a certain temperature range. For example, the temperature is preferably within ±15°C of the reference temperature, and more preferably within ±10°C of the reference temperature.

A holding time in the heat treatment is preferably 1 minutes to 600 minutes, more preferably 5 minutes to 600 minutes, still more preferably 10 minutes to 500 minutes, even more preferably 15 minutes to 500 minutes, and particularly preferably 20 minutes to 500 minutes. Here, from the viewpoint of sufficiently progressing the reaction to obtain a desired intermediate, the holding time is preferably 1 minute or more, more preferably 5 minutes or more, still more preferably 10 minutes or more, even more preferably 15 minutes or more, and particularly preferably 20 minutes or more. The holding time is preferably 600 minutes or less, and more preferably 500 minutes or less, from the viewpoint of preventing the volatilization of low boiling point components such as $P_2S_5$ in the raw material.

The holding time may be further shortened in some cases, such as when the raw material is subjected to a predetermined treatment. Examples of such a treatment include reducing a particle diameter of a raw material, removing or modifying an oxide layer on surfaces of particles contained in a raw material as much as possible by etching or the like, making particles porous, and adjusting mixing conditions of raw materials to improve the raw material homogeneity. Accordingly, reactivity between particles contained in the raw material can be enhanced. In this case, the holding time is preferably 1 second to 10 minutes, more preferably 10 seconds to 10 minutes, and still more preferably 20 seconds to 5 minutes. Here, a lower limit of the holding time is preferably 1 second or more, more preferably 10 seconds or more, and still more preferably 20 seconds or more, from the viewpoint of sufficiently progressing the reaction to obtain a desired intermediate. The holding time is preferably 10 minutes or less, and more preferably 5 minutes or less, from the viewpoint of preventing the volatilization of low boiling point components such as $P_2S_5$ in the raw material.

A pressure during the heat treatment is not particularly limited, and for example, a normal pressure to a slight pressure is preferred, and a normal pressure is more preferred.

The heat treatment for synthesizing the intermediate is preferably performed in an inert gas atmosphere in order to prevent a side reaction between the raw material mixture and water vapor, oxygen, or the like. Specific examples thereof include $N_2$ gas, argon gas, and helium gas. A dew point during the heat treatment is preferably -20°C or lower, and a lower limit thereof is not particularly limited, and is generally about -80°C. An oxygen concentration is preferably 1000 ppm or less.

In the synthesis of the intermediate, intermediates having different compositions according to the purpose can be obtained by adjusting the compound contained in the raw material mixture and the mixing ratio thereof and controlling the conditions during the heat treatment. The obtained intermediate may be used in a heating and melting step as it is in a heating furnace used for the synthesis of the intermediate without being taken out from the heat-resistant container, or may be taken out after cooling to room temperature and temporarily stored. A plurality of intermediates having different compositions that have been removed and stored can be combined and used in the heating and melting step. In the heating and melting step, by controlling an amount of sulfur introduced into the intermediate in a gas atmosphere containing the sulfur element, sulfide solid electrolytes having different compositions, physical properties, and performances can be easily prepared.

Examples of the composition of the intermediate obtained in the present step include a compound containing Li, P and S, such as $Li_4P_2S_6$ and $Li_3PS_4$. In the heating and melting step, from the viewpoint of controlling the amount of sulfur introduced into the intermediate in a gas atmosphere containing the sulfur element, the intermediate preferably contains at least one of $Li_4P_2S_6$ and $Li_3PS_4$. Since $Li_4P_2S_6$ and $Li_3PS_4$ are thermodynamically stable, they are also preferred from the viewpoint of stability during temporary storage of the intermediate.

Here, the reaction occurring in the synthesis of the intermediate varies depending on the composition of the target sulfide solid electrolyte, and is typically a reaction characterized in that $Li_2S$ and $P_2S_5$ contained in the raw material start to react at about 250°C to form at least one of $Li_4P_2S_6$ and $Li_3PS_4$. In the reaction, $Li_2S$ and $P_2S_5$ may be obtained starting from a raw material containing Li or a raw material containing P, respectively, in a preliminary stage of obtaining each.

In order to essentially accelerate the reaction, it is preferable to increase the reactivity between particles contained in the raw material, as described above. In particular, in the reaction, the particle diameter of $Li_2S$, which is the counterpart to which $P_2S_5$ reacts first, can easily affect the synthesis reaction of the intermediate. Therefore, from the viewpoint of promoting the synthesis reaction of the intermediate, it is preferable to make the particle diameter of $Li_2S$ or a raw material containing Li in a preliminary stage of obtaining $Li_2S$ small. It is considered that lowering the crystallinity of the surface of $Li_2S$ and increasing the surface area other than the atomization are effective from the above viewpoint. It is considered that the reaction of $Li_2S$ and $P_2S_5$ in a gas atmosphere containing the sulfur element also contributes to promoting the synthesis reaction of the intermediate.

By going through step a1-2 of obtaining the intermediate, volatilization of the sulfur component and the phosphorus component in the raw material can be prevented compared to obtaining a desired sulfide solid electrolyte directly from the raw material. Therefore, a compound with clear compositional information containing Li, P, and S, such as $Li_4P_2S_6$ and $Li_3PS_4$, can be synthesized as an intermediate. The intermediate is thermodynamically stable, and therefore can be extracted by lowering the temperature to room temperature after the heat treatment during the synthesis of the intermediate. Since the composition analysis can be performed on the intermediate thus taken out, a sulfur introduction amount required in the heat-melting step can be found. By going through an intermediate having a specific composition from the raw material, more appropriate conditions for heating and melting can be easily set in accordance with the composition of the intermediate. Accordingly, since the sulfur introduction amount can be appropriately controlled in a gas atmosphere containing the sulfur element, composition deviation is unlikely to occur. Further, the composition of the sulfide solid electrolyte to be obtained can be homogenized by heating and melting through an intermediate having a composition closer to the target sulfide solid electrolyte than the raw material. In addition, when a plurality of types of intermediates having different compositions are combined and heated and melted, sulfide solid electrolytes having different compositions, physical properties, and performances can be easily separately prepared.

- Step a2

As shown in FIG. 2, step a2 is a step of heating and melting the intermediate obtained in step a1-2 in a gas atmosphere containing the sulfur element as step S12 to obtain a molten material.

As described above, the intermediate to be heated and melted may be an intermediate composition in which a plurality of types of intermediates are mixed, as necessary, or an intermediate to which a raw material containing another element, such as a raw material containing the halogen element, is added, which is then heated and melted.

**In** step 2 of the production method i, the raw material mixture is heated and melted. However, when the present production method a is adopted in the production method i, the intermediate obtained by the heat treatment of the raw material mixture, rather than the raw material mixture, is subjected to heating and melting. As described above, the intermediate composition in which a plurality of types of intermediates are mixed, or the intermediate to which a raw material containing other elements is added, may be subjected to heating and melting.

A specific method during heating and melting is not particularly limited, and examples thereof include a method in which an intermediate is put into a heat-resistant container and heated in a heating furnace. The heat-resistant container is not particularly limited, and examples thereof include a heat-resistant container made of carbon, a heat-resistant container containing an oxide such as quartz, quartz glass, borosilicate glass, aluminosilicate glass, alumina, zirconia, and mullite, a heat-resistant container containing a nitride such as silicon nitride and boron nitride, and a heat-resistant container containing a carbide such as silicon carbide. Further, these heat-resistant containers may have a bulk formed of the above-described material, or may be a container in which a layer of carbon, an oxide, a nitride, a carbide, or the like is formed.

The heating and melting is performed in a gas atmosphere containing the sulfur element. The gas containing the sulfur element is, for example, a gas containing a compound containing the sulfur element or elemental sulfur, such as a sulfur gas, a hydrogen sulfide gas, and a carbon disulfide gas.

The gas containing the sulfur element may be composed only of a gas compound containing the sulfur element, such as a sulfur gas, a hydrogen sulfide gas, and a carbon disulfide gas, or also preferably contains an inert gas such as an $N_2$ gas, an argon gas, and a helium gas from the viewpoint of reducing cost and from the viewpoint of using the gas as a carrier gas for conveying a sulfur component. The gas containing the sulfur element may contain impurities derived from a sulfur source, or the like, as long as the impurities do not impair the effects of the present production method.

When the gas containing the sulfur element contains a sulfur gas, a content of the sulfur gas ($S_x$ ($x$ = 2 to 8)) in the gas containing the sulfur element is preferably 0.01 vol% to 100 vol%, more preferably 0.1 vol% to 99 vol%, and still more preferably 0.2 vol% to 98 vol%. Here, from the viewpoint of providing a sufficient amount of the sulfur element and proceeding with the reaction of introducing sulfur, the content of the sulfur gas is preferably 0.01 vol% or more, more preferably 0.1 vol% or more, and still more preferably 0.2 vol% or more. The content of the sulfur gas is 100 vol% or less, and is preferably 99 vol% or less, and more preferably 98 vol% or less, from the viewpoint of cost reduction and the viewpoint of using an inert gas as a carrier gas. The content of the sulfur gas ($S_x$ (where x = 2 to 8)) can be measured by mass spectrometry gas chromatography.

The gas containing the sulfur element is obtained by heating the sulfur source. Therefore, the sulfur source is not particularly limited as long as the sulfur source is elemental sulfur or a sulfur compound from which the gas containing the sulfur element can be obtained by heating, and examples thereof include elemental sulfur, organic sulfur compounds such as hydrogen sulfide and carbon disulfide, iron sulfides such as $FeS$, $Fe_2S_3$, $FeS_2$, and $Fe_{1-x}S$, bismuth sulfide ($Bi_2S_3$), copper sulfides such as $CuS$, $Cu_2S$, and $Cu_{1-x}S$, polysulfides such as lithium polysulfide and sodium polysulfide, polysulfides, and rubber subjected to a sulfur vulcanization treatment.

For example, these sulfur sources are heated in a sulfur source heating portion that is separately provided to generate the gas containing the sulfur element, and the gas is transported to a heat-melting furnace using an inert gas such as an $N_2$ gas, an argon gas, and a helium gas as a carrier gas to obtain the gas atmosphere containing the sulfur element. By separating the sulfur source heating portion from the portion where the heat-melting step is performed, even if the gas introduced into the heat-melting furnace contains oxygen or moisture, the oxygen and moisture can be removed by reacting with the sulfur gas before being introduced. This is preferred since a high-quality, high-purity sulfide solid electrolyte with few impurities can be obtained.

A temperature for heating the sulfur source may be appropriately selected depending on the type of the sulfur source to be used. For example, when elemental sulfur is used as the sulfur source, the heating temperature is preferably 250°C or higher and 750°C or lower.

Among the sulfur source described above, elemental sulfur, $H_2S$, and a solid sulfur source such as $Bi_2S_3$, iron sulfides, copper sulfides, and $CS_2$ may be pneumatically conveyed in a fine state such as powder to a heating and melting furnace by a carrier gas to obtain a gas atmosphere containing a sulfur element.

A specific method for heating and melting the intermediate can be a known method according to the related art. For example, a portion for heating a sulfur source to generate a gas containing the sulfur element and a portion for supplying the gas containing the sulfur element from there to heat and melt the intermediate may be provided separately. The sulfur component such as $P_2S_5$ vaporized during the synthesis reaction of the intermediate may be collected and used as the sulfur source in the present step a2.

The intermediate is heated and melted in a gas atmosphere containing the sulfur element, whereby sulfur is introduced into a melt of the intermediate. Accordingly, a sufficient amount of sulfur can be introduced to obtain a sulfide solid electrolyte having a desired composition.

By introducing sulfur in a liquid phase state in which the intermediate is molten, a reaction time for introducing sulfur can be shortened compared to a reaction in a solid phase state. Further, since the melt is in a liquid phase, sulfur can be easily introduced uniformly throughout the melt, and the obtained sulfide solid electrolyte tends to have a homogeneous composition. The viscosity of the melt of the intermediate is reduced due to fluidization of the solid, and the melt is in a highly homogenous state. Accordingly, the melt of the intermediate has high solubility and diffusibility for the gas containing the sulfur element. Therefore, the effects of shortening the reaction time and homogenizing the composition by the reaction in the liquid phase state are more excellent. It is more preferred to perform the heating and melting while stirring the melt and the gas containing the sulfur element, since the above effects are more easily obtained.

A temperature for the heating and melting is preferably 600°C to 950°C, more preferably 630°C to 900°C, and still more preferably 650°C to 850°C. Here, the temperature for the heating and melting is preferably 600°C or higher, more preferably 630°C or higher, and still more preferably 650°C or higher, from the viewpoint of increasing the fluidity of the melt and promoting the reaction of introducing sulfur. The temperature for the heating and melting is preferably 950°C or lower, more preferably 900°C or lower, and still more preferably 850°C or lower, from the viewpoint of preventing deterioration or decomposition of the components in the melt due to heating.

A time for the heating and melting is preferably 0.1 hours to 10 hours, more preferably 0.5 hours to 9.5 hours, still more preferably 0.7 hours to 9 hours, and particularly preferably 1 hour to 9 hours. Here, the time for the heating and melting is preferably 0.1 hours or more, more preferably 0.5 hours or more, still more preferably 0.7 hours or more, and even more preferably 1 hour or more, from the viewpoint of progressing the reaction of introducing sulfur. The time for the heating and melting is preferably 10 hours or less, more preferably 9.5 hours or less, and still more preferably 9 hours or less, from the viewpoint of preventing deterioration or decomposition of the components in the melt due to heating.

The heating and melting may be performed as a continuous process. The continuous process is a step in which the dissolved melt is allowed to flow continuously from the heat-resistant container. The raw material to be charged may be an intermediate or a raw material mixture. The raw materials may be charged continuously or intermittently. When the heating and melting is performed as a continuous process, the melt may be held in a molten state for a long period of time under appropriate conditions, taking into consideration the progress of the reaction of introducing sulfur and the deterioration of components in the melt. The long period of time may be, for example, about 24 hours.

A pressure during the heating and melting is not particularly limited, and for example, a normal pressure to a slight pressure is preferred, and a normal pressure is more preferred. It is preferable that a partial sulfur pressure is set to $10^{-3}$

atm to $10^0$ atm. By setting the partial sulfur pressure to such a value, the device is not complicated, sulfur can be efficiently introduced at low cost, and the target sulfide solid electrolyte is easily obtained.

A dew point during the heating and melting is preferably -20°C or lower in order to prevent a side reaction with water vapor, oxygen, and the like. A lower limit thereof is not particularly limited, and is generally about -80°C. Further, an oxygen concentration is preferably 1000 ppm or less.

- Step a3

As shown in FIG. 2, step a3 is a step of quenching the molten material obtained in step a2 at a cooling rate of 500°C/sec or more as step S13 to obtain a solid.

The molten material obtained by the heating and melting is quenched at a cooling rate of 500°C/sec or more. Accordingly, the obtained solid containing a sulfide glass phase has extremely high composition homogeneity, and quality variation can be prevented extremely well. A configuration mainly including the $PS_4$ unit with respect to the $P_2S_7$ unit can be implemented, and the high lithium ion conductivity can be implemented.

The cooling rate may be 500°C/sec or more, preferably 500°C/sec to 1000000°C/sec, more preferably 700°C/sec to 100000°C/sec, and still more preferably 1000°C/sec to 10000°C/sec. Here, the cooling rate is 500°C/sec or more, preferably 700°C/sec or more, and more preferably 1000°C/sec or more, from the viewpoint of composition homogeneity of the obtained solid and high lithium ion conductivity of the sulfide solid electrolyte. Considering the cooling rate of twin rollers, which is generally said to have the fastest quenching rate, the cooling rate is preferably 1000000°C/sec or less, and from the viewpoint of actual production, the cooling rate is more preferably 100000°C/sec or less, and still more preferably 10000°C/sec or less. An atmosphere during the quenching is preferably an inert atmosphere with a low moisture content, similar to an atmosphere during dissolution.

The crystallinity of the sulfide solid electrolyte containing the sulfide glass phase can be adjusted by the cooling rate, in addition to the method of adding a compound serving as a crystal nucleus to the raw material or the method of adding a compound serving as a crystal nucleus to the molten material, as described above.

The solid obtained in step a3 may be used as the sulfide solid electrolyte as it is, or may be subjected to pulverization, drying, or the like depending on the application, and then used as the sulfide solid electrolyte.

<<Production Method b>>

- Step b1-1

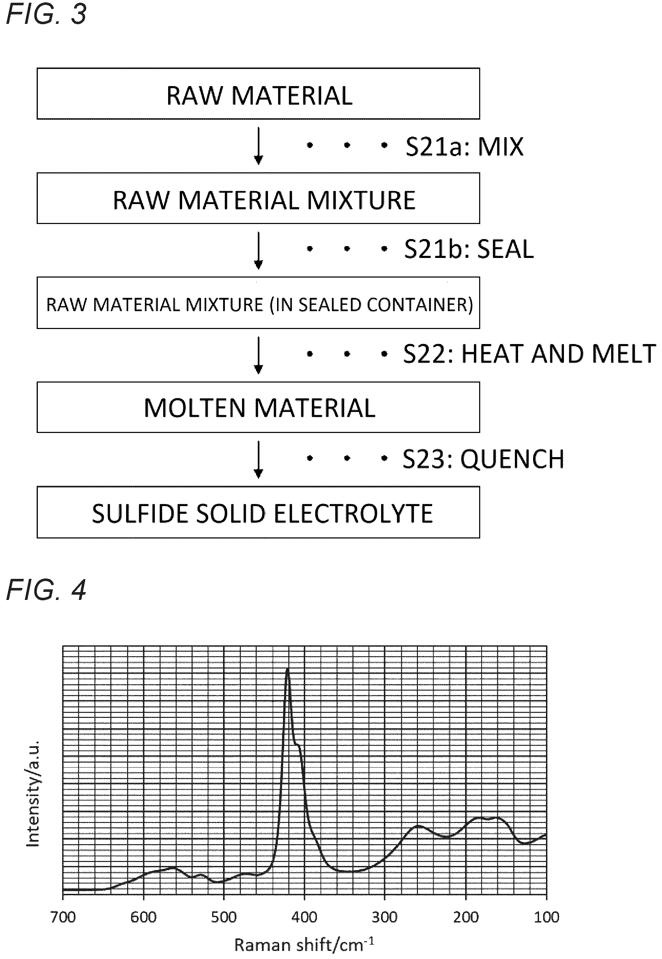

As shown in FIG. 3, step b1-1 in the production method b is a step of mixing raw materials as step S21a. Specifically, step b1-1 is the same as in step a1-1 in the production method a described above, except that mixing of the raw material containing the halogen element is essential to obtain the raw material mixture, and the preferred aspect is also the same. When halogen is not necessary as a constituent element of the sulfide solid electrolyte to be obtained, mixing of the raw material containing the halogen element is not essential.

- Step b1-2

As shown in FIG. 3, in step b1-2, the raw material mixture obtained in step b1-1 is sealed in a sealed container as step S21b.

The sealed container is not particularly limited as long as it is a heat-resistant container capable of sealing, and examples thereof include a heat-resistant container made of carbon, a heat-resistant container containing an oxide such as quartz, quartz glass, borosilicate glass, aluminosilicate glass, alumina, zirconia, and mullite, a heat-resistant container containing a nitride such as silicon nitride and boron nitride, and a heat-resistant container containing a carbide such as silicon carbide. Further, these heat-resistant containers may have a bulk formed of the above-described material, or may be a container in which a layer of carbon, an oxide, a nitride, a carbide, or the like is formed.

When the raw material mixture is sealed in the sealed container, a vacuum atmosphere is preferred from the viewpoint of not increasing an internal pressure, but a trace amount of inert gas such as nitrogen or argon may be mixed.

A pressure inside the sealed container is not particularly limited as long as it is 1 to 2 atmospheres or less at the melting temperature, but a vacuum is preferred from the viewpoint of not increasing the internal pressure.

A dew point inside the sealed container is preferably -20°C or lower in order to prevent a side reaction with water vapor, oxygen, and the like. A lower limit thereof is not particularly limited, and is generally about -80°C. Further, an oxygen concentration is preferably 1000 ppm or less.

- Step b2

As shown in FIG. 3, step b2 is a step of heating the sealed container containing the raw material mixture in step b1-2, and heating and melting the raw material mixture as step S22 to obtain a molten material.

A temperature for the heating and melting is preferably 600°C to 950°C, more preferably 630°C to 900°C, and still more preferably 650°C to 850°C. Here, the temperature for the heating and melting is preferably 600°C or higher, more preferably 630°C or higher, and still more preferably 650°C or higher, from the viewpoint of increasing the fluidity of the melt to promote the reaction of introducing sulfur and homogenizing the melt. The temperature for the heating and melting is preferably 950°C or lower, more preferably 900°C or lower, and still more preferably 850°C or lower, from the viewpoint of preventing deterioration or decomposition of components in the melt due to heating.

A time for the heating and melting is preferably 0.1 hours to 10 hours, more preferably 0.5 hours to 9.5 hours, still more preferably 0.7 hours to 9 hours, and particularly preferably 1 hour to 9 hours. Here, the time for the heating and melting is preferably 0.1 hours or more, more preferably 0.5 hours or more, still more preferably 0.7 hours or more, and even more preferably 1 hour or more, from the viewpoint of progressing the reaction of introducing sulfur. The time for the heating and melting is preferably 10 hours or less, more preferably 9.5 hours or less, and still more preferably 9 hours or less, from the viewpoint of preventing deterioration or decomposition of the components in the melt due to heating.

When the heating and melting is performed while the raw material mixture is put in the sealed container, no gas containing the sulfur element is introduced from the outside. However, when the sealed container is heated, there is a small amount of volatilization of S derived from the raw material or from the sulfur raw material in the sealed container. Therefore, the present step b2 corresponds to the heating and melting in a gas atmosphere containing the sulfur element in step 2 of the production method i.

- Step b3

As shown in FIG. 3, step b3 is a step of quenching the molten material obtained in step b2 at a cooling rate of 500°C/sec or more as step S23 to obtain a solid.

Specifically, step b3 is the same as step a3 in the above production method a, except that the molten material is subjected to quenching by a quenching roll or the like at the same time when a tip end of the sealed container is broken, and the preferred aspect is also the same.

A sulfide solid electrolyte according to the present embodiment and a method for producing the same are described above, and another aspect of sulfide solid electrolyte according to the present embodiment is as follows.

[1] A sulfide solid electrolyte including a sulfide glass phase, in which the sulfide solid electrolyte includes a $PS_4$ unit and a $P_2S_7$ unit, a ratio of a peak intensity $I_{(PS4)}$ of the $PS_4$ unit and a peak intensity $I_{(P2S7)}$ of the $P_2S_7$ unit in a Raman spectrum satisfies a relationship of $0.05 < \{I_{(P2S7)}/I_{(PS4)}\} < 1.00$, the sulfide solid electrolyte includes Li, P, S, and Ha as constituent elements, the Ha is a halogen element, and contents of the constituent elements in terms of at% are as follows: Li: 30% to 50%, P: 5% to 15%, and S: 30% to 60%.

[2] The sulfide solid electrolyte according to [1], in which the Ha includes at least one selected from the group consisting of F, Cl, Br and I, and the contents of the constituent elements in terms of at% are as follows: Li: 30% to 50%, P: 5% to 12%, S: 30% to 50%, and Ha: 2% to 10%.

[3] The sulfide solid electrolyte according to [1] or [2], further including a $P_2S_6$ unit, in which a ratio of a peak intensity $I_{(P2S6)}$ of the $P_2S_6$ unit and the peak intensity $I_{(P2S7)}$ of the $P_2S_7$ unit in the Raman spectrum satisfies a relationship of $0.5 < \{I_{(P2S7)}/I_{(P2S6)}\} < 10$.

[4] The sulfide solid electrolyte according to any one of [1] to [3], in which a ratio of the contents of Li and P among the constituent elements in terms of at% satisfies a relationship of $2.5 \leq (Li/P) \leq 7$.

[5] The sulfide solid electrolyte according to any one of [1] to [4], in which the sulfide solid electrolyte has a peak in a wavenumber region of 150 $cm^{-1}$ to 180 $cm^{-1}$ in the Raman spectrum, and a full width at half maximum of the peak is 20 $cm^{-1}$ or more.

[6] The sulfide solid electrolyte according to any one of [1] to [5], in which a content of the sulfide glass phase is 50 wt% or more.

[7] The sulfide solid electrolyte according to any one of [1] to [6], which is used in a lithium-ion secondary battery.

[8] A method for producing a sulfide solid electrolyte, the method including: mixing raw materials containing a lithium element, a sulfur element, and a phosphorus element to obtain a raw material mixture; heating and melting the raw material mixture in a gas atmosphere containing a sulfur element to obtain a molten material; and quenching the molten material to obtain a solid, in which a ratio of contents of the lithium element and the phosphorus element in terms of at% in the raw material mixture is $Li/P \geq 2.5$, and a cooling rate in the quenching is 500°C/sec or more.

[9] The method for producing a sulfide solid electrolyte according to [8], further including mixing a raw material containing a halogen element to obtain the raw material mixture.

[10] The method for producing a sulfide solid electrolyte according to [8] or [9], in which a heating temperature in the heating and melting is 600°C to 950°C.

[11] The method for producing a sulfide solid electrolyte according to any one of [8] to [10], in which contents of the elements in terms of at% when mixing the raw materials are as follows: Li: 30% to 50%, P: 5% to 15%, and S: 30% to 60%.

[12] The method for producing a sulfide solid electrolyte according to any one of [8] to [11], in which contents of the elements in terms of at% when mixing the raw materials are as follows: Li: 30% to 50%, P: 5% to 12%, S: 30% to 50%, and Ha: 2% to 10%.

EXAMPLES

Hereinafter, the present invention is described in detail with reference to Examples, but the present invention is not limited thereto.

Example 1 and Example 4 to Example 10 are Inventive Examples, and Example 2 and Example 3 are Comparative Examples.

[Example 1]

A lithium sulfide powder (manufactured by Sigma Corporation, purity: 99.98%), a phosphorus pentasulfide powder (manufactured by Sigma Corporation, purity: 99%), and a lithium bromide powder (manufactured by Sigma Corporation, purity: 99.995%) were weighed in a dry nitrogen atmosphere so as to have a composition (mol%) shown in Table 1, and mixed for 1 minute in a High mode with a mixer (X-TREME (MX1100XTM) manufactured by WARING) in the same atmosphere to obtain a raw material mixture (step b1-1). The obtained raw material mixture was put in a carbon-coated quartz tube and sealed in a vacuum atmosphere (step b1-2). The raw material mixture was heated at 750°C for 1 hour to obtain a molten material of the raw material mixture (step b2). While still in the molten state, a tip end of the carbon-coated quartz tube was broken and the molten material was cooled at 5000°C/sec using a quenching roll to obtain a sulfide solid electrolyte (step b3).

Here, in the above step b2, no gas containing a sulfur element is introduced from the outside. However, since there is a small amount of volatilization of S originating from the raw material, the above step b2 corresponds to heating and melting in a gas atmosphere containing the sulfur element.

A blank column in "Composition (mol%)" in Table 1 means no active additions, except for unavoidable impurities contained in the raw material.

The composition of the obtained sulfide solid electrolyte was determined by composition analysis, and it was confirmed that the composition roughly matched the value of "Composition (mol%)" in Table 1 which is a charge ratio. The expression "roughly matched" means that a difference from the charge composition ratio was within $\pm 5\%$. Therefore, the "composition (at%)" in Table 1 is calculated from the "composition (mol%)" in Table 1, which is a charge ratio, and can be regarded as a content (at%) of the constituent element of the obtained sulfide solid electrolyte. The same applies to Example 2 to Example 10.

[Example 2]

A lithium sulfide powder (manufactured by Sigma Corporation, purity: 99.98%), and a phosphorus pentasulfide powder (manufactured by Sigma Corporation, purity: 99%) were weighed in a dry nitrogen atmosphere so as to have a composition (mol%) shown in Table 1, and mixed for 1 minute in a High mode with a mixer (X-TREME (MX1100XTM) manufactured by WARING) in the same atmosphere to obtain a raw material mixture (step b1-1). The obtained raw material mixture was put in a carbon-coated quartz tube and sealed in a vacuum atmosphere (step b1-2). The raw material mixture was heated at 750°C for 1 hour to obtain a molten material of the raw material mixture (step b2). Next, the carbon-coated quartz tube was cooled in water at 30°C/sec to obtain a sulfide solid electrolyte.

[Example 3]

A lithium sulfide powder (manufactured by Sigma Corporation, purity: 99.98%), a phosphorus pentasulfide powder (manufactured by Sigma Corporation, purity: 99%), and a lithium bromide powder (manufactured by Sigma Corporation, purity: 99.995%) were weighed in a dry nitrogen atmosphere so as to have a composition (mol%) shown in Table 1, followed by performing mechanical milling in the same atmosphere at 400 rpm for 20 hours using a planetary ball mill using $ZrO_2$ balls with a diameter of 4 mm to obtain a sulfide solid electrolyte. In Example 3, unlike Example 1 and Example 2, since a solid was not obtained by cooling, the cooling rate in Table 1 is indicated by "-".

[Example 4 to Example 10]

A sulfide solid electrolyte was obtained in the same manner as in Example 1, except that a lithium chloride powder (manufactured by Sigma Corporation, purity: 99.99%), a lithium iodide powder (manufactured by Sigma Corporation, purity: 99.99%), and $SiO_2$ (manufactured by AS ONE Corporation, quartz test tube SJT series, pulverized and used) were appropriately used as raw materials together with a lithium bromide powder (manufactured by Sigma Corporation, purity: 99.995%) or instead of a lithium bromide powder (manufactured by Sigma Corporation, purity: 99.995%) so as to have the composition (mol%) shown in Table 1.

[Evaluation]

<<Crystallinity>>

The sulfide solid electrolyte was pulverized in a mortar and passed through a 100 $\mu$m sieve to obtain a solid electrolyte powder having an average particle diameter D50 of about 20 $\mu$m. Then, using an X-ray diffraction device (manufactured by Rigaku Corporation, Smart Lab), measurements were performed under the following conditions: radiation source: CuK$\alpha$ radiation ($\lambda$=1.5418 Å), tube voltage: 45 kV, tube current: 200 mA, scan angle: 10° to 100°, scan speed: 5°/min, step number: 0.01°/step, in an air non-exposure environment.

The presence or absence of a crystal peak was confirmed in the obtained XRD pattern, and the present crystal types were shown in Table 1. When measuring the XRD, a silicon powder was added as an internal standard, and the crystallinity (wt%) was obtained by Rietveld analysis. The crystallinity (wt%) was subtracted from 100 wt% to calculate a content (wt%) of the sulfide glass phase. Results are shown in Table 1.

<<$PS_4$ unit, $P_2S_7$ unit, $P_2S_6$ unit>>

The sulfide solid electrolyte was pulverized in a mortar and passed through a 100 $\mu$m sieve to obtain a solid electrolyte powder having an average particle diameter D50 of about 20 $\mu$m. The obtained solid electrolyte powder was formed into pellets having a diameter of 1 cm, and Raman spectrum measurement (device name: LabRAM HR Evolution manufactured by Horiba, Ltd.) was performed on 10 randomly selected points in an air non-exposure environment.

The measurement conditions were as follows: excitation wavelength: 532 nm, power when irradiating sample: 5 mW, objective lens: 10x, numerical aperture: 0.25, confocal pinhole: 200 $\mu$m, grating: 1200 gr/mm, measurement time: 3 seconds x 10 times, spot diameter: 3 $\mu$m.

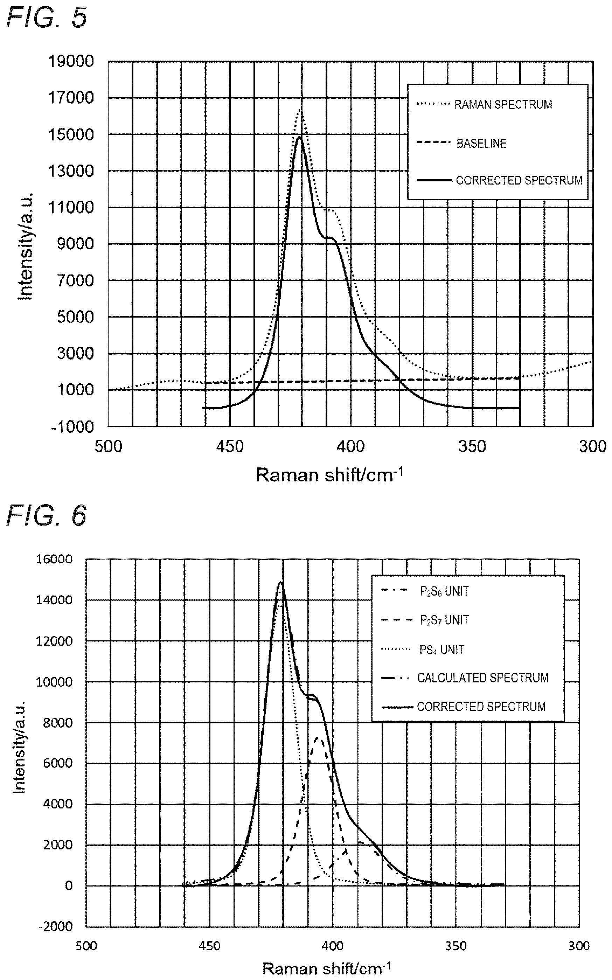

For reference, a spectrum obtained in Example 1 was shown in FIG. 4, and a corrected spectrum was obtained by performing baseline correction on the Raman spectrum as shown in FIG. 5. Next, as shown in FIG. 6, peak separation was performed on the corrected spectrum using a function obtained by mixing a Gauss function and a Lorentz function. The mixed function is expressed as

$$f(x) = (1\text{-}M)(\text{Gauss function}) + (M)(\text{Lorentz function})$$

using the Gauss function and the Lorentz function, and a value of M, which represents a mixing ratio of the functions (% Lorentz function), is set to 0.25.

After the peak separation, a peak having a peak top at a wavenumber of 415 cm$^{-1}$ to 425 cm$^{-1}$ was defined as a peak of the $PS_4$ unit, a peak having a peak top at a wavenumber of 402 cm$^{-1}$ to 412 cm$^{-1}$ was defined as a peak of the $P_2S_7$ unit, and a peak having a peak top at a wavenumber of 383 cm$^{-1}$ to 393 cm$^{-1}$ was defined as a peak of the $P_2S_6$ unit.

In performing peak separation into these three peaks, the baseline was drawn in a region of 330 cm$^{-1}$ to 460 cm$^{-1}$. Then, a full width at half maximum was fixed at 15 cm$^{-1}$ for a peak having a peak top at a wavenumber of 415 cm$^{-1}$ to 425 cm$^{-1}$, at 15 cm$^{-1}$ for a peak having a peak top at a wavenumber of 402 cm$^{-1}$ to 412 cm$^{-1}$, and at 22 cm$^{-1}$ for a peak having a peak top at a wavenumber of 383 cm$^{-1}$ to 393 cm$^{-1}$ to perform the peak separation. Optimization was performed using the least squares method such that a difference between a spectrum with the baseline drawn and a calculated spectrum obtained by summing up the peaks resulting from the peak separation was minimized.

As described above, for Example 1, a Raman spectrum is shown in FIG. 4, the Raman spectrum and a corrected spectrum obtained by performing baseline correction are shown in FIG. 5, and three spectra obtained by peak separation from the corrected spectrum are shown in FIG. 6. FIG. 6 also shows a calculated spectrum obtained by summing up the three peaks obtained by the peak separation, and it was verified that the peak separation was performed appropriately based on similarity between the corrected spectrum and the calculated spectrum.

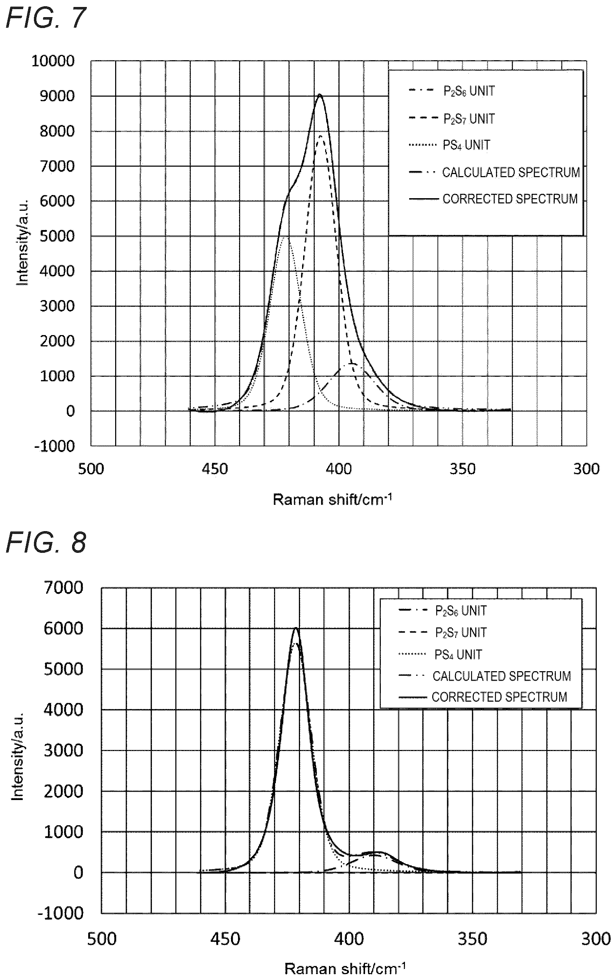

FIG. 7 shows a corrected spectrum, three spectra obtained by peak separation, and a calculated spectrum obtained by summing up the three peaks obtained by the peak separation in Example 2, and FIG. 8 shows a corrected spectrum, three spectra obtained by peak separation, and a calculated spectrum obtained by summing up the three peaks obtained by the peak separation in Example 3.

Ratios of $\{I_{(P2S7)}/I_{(PS4)}\}$ and $\{I_{(P2S7)}/I_{(P2S6)}\}$ were determined with the highest intensity of each peak after the peak separation as described above, that is, an intensity of the peak top as a peak intensity, a peak intensity of the $PS_4$ unit as $I_{(PS4)}$, a peak intensity of the $P_2S_7$ unit as $I_{(P2S7)}$, and a peak intensity of the $P_2S_6$ unit as $I_{(P2S6)}$. Results are shown in Table 1.

In the Raman spectrum, the presence or absence of a peak in a wavenumber region of 150 cm$^{-1}$ to 180 cm$^{-1}$ was confirmed, and when a peak was observed, a full width at half maximum of the peak was determined. Results are shown in Table 1.

<<Lithium Ion Conductivity>>

The sulfide solid electrolyte was pulverized in a mortar and passed through a 100 $\mu$m sieve to obtain solid electrolyte powder having an average particle diameter D50 of about 20 $\mu$m. The obtained solid electrolyte powder was compressed at a pressure of 380 kN to prepare a measurement sample as a powder compact. An AC impedance of the measurement sample was measured using an AC impedance measuring device (potentiostat/galvanostat VSP, manufactured by Bio-Logic Sciences Instruments) at a measurement frequency of 100 Hz to 1 MHz, a measurement voltage of 100 mV, and a measurement temperature of 25°C. The lithium ion conductivity was determined from the obtained Nyquist plot. Results are shown in Table 1 under "$\sigma_{25}$".

[Table 1]

| | Composition (mol%) | | | | | | Composition (at%) | | | | | | | | |
|---|---|---|---|---|---|---|---|---|---|---|---|---|---|---|---|
| | $Li_2S$ | $P_2S_5$ | LiCl | LiBr | LiI | $SiO_2$ | Li | P | S | Cl | Br | I | Si | O | Li/P |
| Example 1 | 65 | 21 | | 14 | | | 38.9 | 11.4 | 45.9 | 0.0 | 3.8 | 0.0 | 0.0 | 0.0 | 3.4 |
| Example 2 | 70 | 30 | | | | | 33.3 | 14.3 | 52.4 | 0.0 | 0.0 | 0.0 | 0.0 | 0.0 | 2.3 |
| Example 3 | 65 | 21 | | 14 | | | 38.9 | 11.4 | 45.9 | 0.0 | 3.8 | 0.0 | 0.0 | 0.0 | 3.4 |
| Example 4 | 61 | 21 | | 18 | | | 38.3 | 11.5 | 45.4 | 0.0 | 4.9 | 0.0 | 0.0 | 0.0 | 3.3 |
| Example 5 | 58 | 19 | | 23 | | | 39.4 | 10.8 | 43.3 | 0.0 | 6.5 | 0.0 | 0.0 | 0.0 | 3.7 |
| Example 6 | 58 | 19 | | 12 | 11 | | 39.4 | 10.8 | 43.3 | 0.0 | 3.4 | 3.1 | 0.0 | 0.0 | 3.7 |
| Example 7 | 64 | 18 | | 18 | | | 41.2 | 10.2 | 43.5 | 0.0 | 5.1 | 0.0 | 0.0 | 0.0 | 4.1 |
| Example 8 | 63 | 15 | | 22 | | | 43.8 | 8.9 | 40.8 | 0.0 | 6.5 | 0.0 | 0.0 | 0.0 | 4.9 |
| Example 9 | 57 | 11 | 23 | | | 9 | 42.3 | 7.0 | 35.2 | 7.0 | 0.0 | 0.0 | 2.8 | 5.6 | 6.0 |
| Example 10 | 57 | 11 | | 23 | | 9 | 42.3 | 7.0 | 35.2 | 0.0 | 7.0 | 0.0 | 2.8 | 5.6 | 6.0 |

(Table 1 continued)

| | Cooling rate (°C/min) | Crystal type | Sulfide glass (wt%) | $I(P_2S_7)/I(PS_4)$ | $I(P_2S_7)/I(P_2S_6)$ | Full width at half maximum (cm$^{-1}$) (150-180 cm$^{-1}$) | $\sigma_{25}$ (mS/cm) |
|---|---|---|---|---|---|---|---|
| Example 1 | 5000 | - | > 90% | 0.53 | 3.42 | 39 | 0.8 |
| Example 2 | 30 | - | > 90% | 1.67 | 7.62 | 37 | 0.1 |
| Example 3 | - | - | > 90% | < 0.03 | < 0.03 | 11 | 0.05 |
| Example 4 | 5000 | - | > 90% | 0.42 | 2.12 | 33 | 0.4 |
| Example 5 | 5000 | LiBr, $Li_3PS_4$ | 80% | 0.33 | 3.35 | 33 | 0.6 |
| Example 6 | 5000 | - | > 90% | 0.38 | 4.21 | 35 | 1.1 |
| Example 7 | 5000 | - | > 90% | 0.31 | 2.98 | 41 | 0.7 |
| Example 8 | 5000 | LiBr, $Li_3PS_4$ | 60% | 0.12 | 1.96 | 27 | 0.2 |
| Example 9 | 5000 | - | > 90% | 0.13 | 4.55 | 32 | 1.1 |

(continued)

| | Cooling rate (°C/min) | Crystal type | Sulfide glass (wt%) | $I(P_2S_7)/I(PS_4)$ | $I(P_2S_7)/I(P_2S_6)$ | Full width at half maximum (cm$^{-1}$) (150-180 cm$^{-1}$) | $\sigma_{25}$ (mS/cm) |
|---|---|---|---|---|---|---|---|
| Example 10 | 5000 | - | > 90% | 0.12 | 7.27 | 35 | 1.5 |

From the above results, the sulfide solid electrolyte according to the present embodiment contains the sulfide glass phase, and the high lithium ion conductivity can be implemented. This is implemented due to the high homogeneity of the glass obtained through the molten state, and also because the sulfide solid electrolyte mainly contains the $PS_4$ unit with respect to the $P_2S_7$ unit. The sulfide solid electrolyte in Example 2 had low lithium ion conductivity even though the sulfide glass phase was more than 90 wt%. This is considered to be due to the fact that a proportion of the $P_2S_7$ unit in Example 2 is higher than that in the sulfide solid electrolytes in Examples 1 and 4 to 10.

As a reference example, a sulfide solid electrolyte was produced in the same manner as in Example 2 so as to have the composition in Example 1. As a result, it was confirmed that a crystal peak was observed by XRD measurement, and the lithium ion conductivity was also confirmed to be low at 0.06 mS/cm, and a sulfide solid electrolyte containing a desired sulfide glass phase was not obtained.

Although the present invention has been described in detail with reference to specific embodiments, it is apparent to those skilled in the art that various changes and modifications can be made without departing from the spirit and scope of the present invention. The present application is based on a Japanese Patent Application (Japanese Patent Application No. 2022-114970) filed on July 19, 2022, the content of which is incorporated herein by reference.

**Claims**

1. A sulfide solid electrolyte comprising a sulfide glass phase,

    wherein the sulfide solid electrolyte comprises a $PS_4$ unit and a $P_2S_7$ unit,
    a ratio of a peak intensity $I_{(PS4)}$ of the $PS_4$ unit and a peak intensity $I_{(P2S7)}$ of the $P_2S_7$ unit in a Raman spectrum satisfies a relationship of $0.05 < \{I_{(P2S7)}/I_{(PS4)}\} < 1.00$,
    the sulfide solid electrolyte comprises Li, P, S, and Ha as constituent elements,
    the Ha is a halogen element, and
    contents of the constituent elements in terms of at% are as follows:

    Li: 30% to 50%,
    P: 5% to 15%, and
    S: 30% to 60%.

2. The sulfide solid electrolyte according to claim 1,

    wherein the Ha comprises at least one selected from the group consisting of F, Cl, Br and I, and
    the contents of the constituent elements in terms of at% are as follows:

    Li: 30% to 50%,
    P: 5% to 12%,
    S: 30% to 50%, and
    Ha: 2% to 10%.

3. The sulfide solid electrolyte according to claim 1 or 2, further comprising a $P_2S_6$ unit,
    wherein a ratio of a peak intensity $I_{(P2S6)}$ of the $P_2S_6$ unit and the peak intensity $I_{(P2S7)}$ of the $P_2S_7$ unit in the Raman spectrum satisfies a relationship of $0.5 < \{I_{(P2S7)}/I_{(P2S6)}\} < 10$.

4. The sulfide solid electrolyte according to claim 1 or 2, wherein a ratio of the contents of Li and P among the constituent elements in terms of at% satisfies a relationship of $2.5 \leq (Li/P) \leq 7$.

5. The sulfide solid electrolyte according to claim 1 or 2,

wherein the sulfide solid electrolyte has a peak in a wavenumber region of 150 cm$^{-1}$ to 180 cm$^{-1}$ in the Raman spectrum, and
a full width at half maximum of the peak is 20 cm$^{-1}$ or more.

6. The sulfide solid electrolyte according to claim 1 or 2, wherein a content of the sulfide glass phase is 50 wt% or more.

7. The sulfide solid electrolyte according to claim 1 or 2, which is used in a lithium-ion secondary battery.

8. A method for producing a sulfide solid electrolyte, the method comprising:

   mixing raw materials comprising a lithium element, a sulfur element, and a phosphorus element to obtain a raw material mixture;
   heating and melting the raw material mixture in a gas atmosphere containing a sulfur element to obtain a molten material; and
   quenching the molten material to obtain a solid,
   wherein a ratio of contents of the lithium element and the phosphorus element in terms of at% in the raw material mixture is Li/P $\geq$ 2.5, and
   a cooling rate in the quenching is 500°C/sec or more.

9. The method for producing a sulfide solid electrolyte according to claim 8, further comprising mixing a raw material comprising a halogen element to obtain the raw material mixture.

10. The method for producing a sulfide solid electrolyte according to claim 8 or 9, wherein a heating temperature in the heating and melting is 600°C to 950°C.

11. The method for producing a sulfide solid electrolyte according to claim 8 or 9, wherein contents of the elements in terms of at% when mixing the raw materials are as follows:

    Li: 30% to 50%,
    P: 5% to 15%, and
    S: 30% to 60%.

12. The method for producing a sulfide solid electrolyte according to claim 8 or 9, wherein contents of the elements in terms of at% when mixing the raw materials are as follows:

    Li: 30% to 50%,
    P: 5% to 12%,
    S: 30% to 50%, and
    Ha: 2% to 10%.

## FIG. 1

```
┌─────────────────────────────┐
│        RAW MATERIAL         │
└─────────────────────────────┘
              │ · · · S1: MIX
              ▼
┌─────────────────────────────┐
│    RAW MATERIAL MIXTURE     │
└─────────────────────────────┘
              │ · · · S2: HEAT AND MELT
              ▼
┌─────────────────────────────┐
│       MOLTEN MATERIAL       │
└─────────────────────────────┘
              │ · · · S3: QUENCH
              ▼
┌─────────────────────────────┐
│   SULFIDE SOLID ELECTROLYTE │
└─────────────────────────────┘
```

## FIG. 2

```
┌─────────────────────────────┐
│        RAW MATERIAL         │
└─────────────────────────────┘
              │ · · · S11a: MIX
              ▼
┌─────────────────────────────┐
│    RAW MATERIAL MIXTURE     │
└─────────────────────────────┘
              │ · · · S11b: HEAT TREATMENT
              ▼
┌─────────────────────────────┐
│         INTERMEDIATE        │
└─────────────────────────────┘
              │ · · · S12: HEAT AND MELT
              ▼
┌─────────────────────────────┐
│       MOLTEN MATERIAL       │
└─────────────────────────────┘
              │ · · · S13: QUENCH
              ▼
┌─────────────────────────────┐
│   SULFIDE SOLID ELECTROLYTE │
└─────────────────────────────┘
```

*FIG. 3*

```
┌─────────────────────────────────────────┐
│            RAW MATERIAL                   │
└─────────────────────────────────────────┘
                │          • • • S21a: MIX
                ▼
┌─────────────────────────────────────────┐
│         RAW MATERIAL MIXTURE              │
└─────────────────────────────────────────┘
                │          • • • S21b: SEAL
                ▼
┌─────────────────────────────────────────┐
│ RAW MATERIAL MIXTURE (IN SEALED CONTAINER)│
└─────────────────────────────────────────┘
                │          • • • S22: HEAT AND MELT
                ▼
┌─────────────────────────────────────────┐
│           MOLTEN MATERIAL                 │
└─────────────────────────────────────────┘
                │          • • • S23: QUENCH
                ▼
┌─────────────────────────────────────────┐
│       SULFIDE SOLID ELECTROLYTE           │
└─────────────────────────────────────────┘
```

*FIG. 4*

## FIG. 5

## FIG. 6

## FIG. 7

## FIG. 8

## INTERNATIONAL SEARCH REPORT

| International application No. |
|---|
| **PCT/JP2023/025802** |

**A. CLASSIFICATION OF SUBJECT MATTER**

**C03C 3/32**(2006.01)i; **C01B 25/14**(2006.01)i; **H01B 1/06**(2006.01)i; **H01B 1/10**(2006.01)i; **H01M 4/62**(2006.01)i; **H01M 10/0562**(2010.01)i
FI: C03C3/32; C01B25/14; H01M10/0562; H01M4/62 Z; H01B1/10; H01B1/06 A

According to International Patent Classification (IPC) or to both national classification and IPC

**B. FIELDS SEARCHED**

Minimum documentation searched (classification system followed by classification symbols)
C03C3/32; C01B25/14; H01B1/06; H01B1/10; H01M4/62; H01M10/0562

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2022/025268 A1 (AGC INC.) 03 February 2022 (2022-02-03) claims, paragraphs [0020]-[0032], [0059], [0066] | 8-12 |
| A | | 1-7 |
| A | JP 2012-094482 A (IDEMITSU KOSAN CO., LTD.) 17 May 2012 (2012-05-17) entire text, all drawings | 1-12 |
| A | WO 2022/102535 A1 (AGC INC.) 19 May 2022 (2022-05-19) entire text, all drawings | 1-12 |

☐ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **29 September 2023** | **10 October 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

International application No.

**PCT/JP2023/025802**

| Patent document cited in search report | | | Publication date (day/month/year) | Patent family member(s) | | | Publication date (day/month/year) |
|---|---|---|---|---|---|---|---|
| WO | 2022/025268 | A1 | 03 February 2022 | EP 4190743 A1 claims, paragraphs [0022]-[0038], [0070], [0077] US 2023/0178799 A1 CN 116171260 A KR 10-2023-0044203 A | | | |
| JP | 2012-094482 | A | 17 May 2012 | (Family: none) | | | |
| WO | 2022/102535 | A1 | 19 May 2022 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2007066539 A
- JP 2014093262 A
- JP 2022114970 A